# EUROPEAN PATENT APPLICATION

(11) **EP 4 832 161 A1**
(43) Date of publication of application: **28.10.2026**
(21) Application number: 24923223.2
(22) Date of filing: 30.07.2024
(51) Int. Cl.: H01M 10/613

(54) **COMPOSITE THERMAL INSULATION PAD, BATTERY, AND ELECTRIC DEVICE**

(30) Priority: 08.02.2024 CN 202410177358
(71) Applicant: Contemporary Amperex Technology Co., Limited, Ningde, Fujian 352100 (CN)
(72) Inventor: WU, Kai, Ningde, Fujian 352100 (CN); HAN, Fengsheng, Ningde, Fujian 352100 (CN)
(74) Representative: Kraus & Lederer PartGmbB
(86) International application number: PCT/CN2024/108551
(87) International publication number: WO 2025/167008

(57) **Abstract**

The present application relates to a composite thermal insulation pad, a battery, and an electric device. The composite thermal insulation pad comprises: a thermal insulation pad body; and a thermally conductive layer, which is arranged in the thermal insulation pad body. According to the composite thermal insulation pad, on one hand, the thermal insulation pad body can achieve the effect of thermal insulation; and on the other hand, the thermally conductive layer is arranged in the thermal insulation pad body, and if heat is conducted to the interior of the thermal insulation pad body to reach the thermally conductive layer, the thermally conductive layer can rapidly and uniformly diffuse the heat throughout the surrounding area, thereby achieving the effect of rapid heat dissipation. The composite thermal insulation pad is applied to the battery; the thermal insulation pad body mainly achieves the effect of thermal insulation under the normal working state of the battery; and when abnormal battery heating occurs, the thermally conductive layer can achieve rapid heat diffusion, thereby achieving the effect of retarding thermal runaway of the battery.

## Description

### CROSS REFERENCE OF RELATED APPLICATIONS

This application claims priority to the Chinese Patent Application No. 2024101773585, filed with the China National Intellectual Property Administration on February 8, 2024 and entitled "COMPOSITE THERMAL INSULATION PAD, BATTERY, AND ELECTRIC APPARATUS", which is incorporated herein by reference in its entirety.

### TECHNICAL FIELD

This application relates to the field of battery technologies, in particular to a composite thermal insulation pad, a battery, and an electric apparatus.

### BACKGROUND

With the rapid development of new energy technologies, batteries are increasingly widely used in various fields, and increasingly high requirements are imposed on performance of batteries. For example, increasingly high requirements are imposed on the energy density of batteries.

However, battery cells with high energy density have large residual energy after thermal runaway. When one battery cell undergoes thermal runaway, its heat is continuously conducted from this battery cell to an adjacent battery cell, and thus causes heat diffusion of an entire battery, leading to serious damage to the entire battery. Therefore, how to retard thermal runaway of batteries is an urgent problem to be solved.

### SUMMARY

In view of this, it is necessary to provide a composite thermal insulation pad, a battery, and an electric apparatus, to address the issue of how to retard thermal runaway of batteries.

According to a first aspect, this application provides a composite thermal insulation pad, including:
a thermal insulation pad body; and
a thermal conduction layer disposed within the thermal insulation pad body.

In the above composite thermal insulation pad of this application, on one hand, the thermal insulation pad body can play a role of thermal insulation, and on the other hand, the thermal conduction layer is disposed within the thermal insulation pad body, so that when heat is conducted to the interior of the thermal insulation pad body and reaches the thermal conduction layer, the thermal conduction layer can rapidly and uniformly disperse the heat to the surroundings, thereby playing a role of rapid heat dissipation. When the composite thermal insulation pad is applied to a battery, under a normal operating state of the battery, the thermal insulation pad body mainly plays a role of thermal insulation; and when abnormal heat generation occurs in the battery, the thermal conduction layer can play a role of rapid diffusion, thereby achieving an effect of retarding thermal runaway of the battery.

In some embodiments, the thermal conduction layer includes one or a stack of at least two of a phase change material layer, a metal layer, and a graphene film layer.

In some embodiments, the thermal conduction layer includes at least two phase change material layers disposed in a stacked manner, an intermediate layer is disposed between at least two of the phase change material layers, and the intermediate layer includes one or a stack of two of the metal layer and the graphene film layer.

In some embodiments, the composite thermal insulation pad satisfies at least one of the following conditions:
(1) a ratio of a thickness of the intermediate layer to a total thickness of the phase change material layers is (0.3 to 5):100;
(2) the thickness of the intermediate layer is 0.02 mm to 0.04 mm; and
(3) an area of a projection of the intermediate layer on the phase change material layer accounts for 90% to 100% of an area of the phase change material layer.

In some embodiments, the phase change material layer includes a thermal insulation substrate and a phase change material, and at least part of the phase change material fills into the thermal insulation substrate.

In some embodiments, the composite thermal insulation pad satisfies at least one of the following conditions:
(1) the phase change material includes at least one of a crystalline hydrated salt, a phase change molten salt, paraffin, silicone oil, silica sol, alumina sol, silica-alumina sol, a fatty acid, and an alcohol;
(2) the thermal insulation substrate includes nano ceramic fiber, and the nano ceramic fiber includes at least one of silica fiber, alumina fiber, zirconia fiber, silica-alumina ceramic fiber, borosilicate ceramic fiber, boroalumina ceramic fiber, and zirconia-alumina-silica ceramic fiber;
(3) the thermal insulation substrate includes nano ceramic fiber, an average diameter of the nano ceramic fiber is 200 nm to 800 nm, and a thickness of the thermal insulation substrate is 1 mm to 2 mm;
(4) in the phase change material layer, a mass ratio of the thermal insulation substrate to the phase change material is 1:(0.8 to 3), and optionally, the thermal insulation substrate is a ceramic thermal insulation substrate; and
(5) at least part of the phase change material fills into pores of the thermal insulation substrate in a form of phase change microcapsules; where the phase change microcapsule includes a core material and a wall material; the wall material wraps an outer surface of the core material; the core material includes the phase change material; optionally, the wall material includes a polymer matrix, and a mass ratio of the polymer matrix to the core material is 1:(1.3 to 3); and optionally, a particle size Dᵥ50 of the phase change microcapsules is 0.5 µm to 8 µm.

In some embodiments, the thermal insulation pad body is provided with a hollow cavity, and the thermal conduction layer is disposed in the hollow cavity; and
optionally, the thermal conduction layer includes a solid phase change material layer.

In some embodiments, the composite thermal insulation pad further includes:
an encapsulation layer, where the encapsulation layer is disposed on a peripheral side of at least one of the thermal conduction layer and the thermal insulation pad body.

In some embodiments, the composite thermal insulation pad satisfies at least one of the following conditions:
(1) the encapsulation layer includes a first encapsulation layer, where the first encapsulation layer is disposed on the peripheral side of the thermal conduction layer and individually encapsulates the thermal conduction layer, the first encapsulation layer and the thermal conduction layer constitute an encapsulated thermal conduction layer, and optionally, a strain of the encapsulated thermal conduction layer under a stress of 0.5 MPa to 5 MPa is 8% to 20%;
(2) the encapsulation layer further includes a second encapsulation layer, where the second encapsulation layer is disposed on the peripheral side of the thermal insulation pad body and individually encapsulates the thermal insulation pad body; and
(3) the encapsulation layer further includes a third encapsulation layer, where the third encapsulation layer is disposed on a shared peripheral side of the thermal insulation pad body and the thermal conduction layer, and encapsulates the thermal insulation pad body and the thermal conduction layer together.

In some embodiments, the composite thermal insulation pad satisfies at least one of the following conditions:
(1) the first encapsulation layer, the second encapsulation layer, and the third encapsulation layer are each independently an aluminum-plastic film or a polymer encapsulation film;
(2) a thickness of the first encapsulation layer is 0.1 mm to 0.3 mm;
(3) the first encapsulation layer has a first encapsulation edge portion, where the first encapsulation edge portion is folded within the thermal insulation pad body;
(4) thicknesses of the second encapsulation layer and the third encapsulation layer are each independently 0.05 mm to 0.1 mm;
(5) a thickness of the thermal conduction layer accounts for 70% to 96% of a total thickness of the encapsulated thermal conduction layer;
(6) a weak portion is disposed on a region of the first encapsulation layer that constitutes an encapsulation cavity; optionally, the thermal conduction layer includes a phase change material layer; and optionally, the weak portion is a region with a smaller thickness and/or lower material strength; and
(7) the composite thermal insulation pad further includes a strain detection member, where the strain detection member is disposed on the thermal insulation pad body; and optionally, the strain detection member is disposed within the thermal insulation pad body, or disposed on an outer surface of the thermal insulation pad body.

In some embodiments, the thermal insulation pad body includes a first thermal insulation layer and a second thermal insulation layer located on two sides of the thermal conduction layer in a thickness direction;
optionally, a strain of the first thermal insulation layer and the second thermal insulation layer under a stress of 0.5 MPa to 5 MPa is 25% to 70%; and
optionally, a strain of the composite thermal insulation pad under a stress of 0.5 MPa to 4 MPa is 15% to 35%.

In some embodiments, the encapsulation layer includes a second encapsulation layer, where the second encapsulation layer is disposed on the peripheral side of the first thermal insulation layer and/or the peripheral side of the second thermal insulation layer;
and/or, the encapsulation layer includes a third encapsulation layer, where the third encapsulation layer is disposed on a shared peripheral side of the first thermal insulation layer, the thermal conduction layer, and the second thermal insulation layer.

In some embodiments, the second encapsulation layer has a second encapsulation edge portion, where the second encapsulation edge portion is folded and located between the thermal conduction layer and at least one of the first thermal insulation layer and the second thermal insulation layer.

In some embodiments, edges of the first thermal insulation layer and the second thermal insulation layer fit with each other to form an assembly cavity, and the thermal conduction layer is located within the assembly cavity.

In some embodiments, an edge of at least one side surface of at least one of the first thermal insulation layer and the second thermal insulation layer forms a protrusion, and the protrusion encloses to form at least part of the assembly cavity.

In some embodiments, the composite thermal insulation pad further includes a first encapsulation frame and a second encapsulation frame, where the first encapsulation frame cooperates with the second encapsulation frame to fix the thermal insulation pad body and the thermal conduction layer.

In some embodiments, the first encapsulation frame has a first limiting groove, and the second encapsulation frame has a second limiting groove, where the thermal insulation pad body and the thermal conduction layer are limited within a limiting space formed by the first limiting groove and the second limiting groove.

In some embodiments, the composite thermal insulation pad satisfies at least one of the following conditions:
(1) the thermal insulation pad body is a ceramic material layer;
(2) a thickness of the thermal conduction layer is 1 mm to 6 mm;
(3) a thickness of the thermal insulation pad body is 0.5 mm to 8 mm;
(4) a ratio of the thickness of the thermal conduction layer to the thickness of the thermal insulation pad body is (0.15 to 12):1;
(5) a length dimension and a width dimension of the thermal insulation pad body respectively match a length dimension and a width dimension of the thermal conduction layer; or, at least one of the length dimension and the width dimension of the thermal insulation pad body is greater than a corresponding length dimension or width dimension of the thermal conduction layer; and
(6) the composite thermal insulation pad further includes a release adhesive layer, where the release adhesive layer includes an adhesive layer and a release film, the adhesive layer is disposed on the outer surface of the thermal insulation pad body, and the release film is disposed on an outer surface of the adhesive layer.

According to a second aspect, this application provides a battery including the above composite thermal insulation pad.

In some embodiments, the battery further includes a plurality of battery cells, and the composite thermal insulation pad is disposed between at least two adjacent battery cells.

In some embodiments, the composite thermal insulation pad is disposed between major surfaces of at least two adjacent battery cells.

According to a third aspect, this application provides an electric apparatus including the battery as described above.

Details of one or more embodiments of this application are provided in the following accompanying drawings and description. Other features, objectives, and advantages of this application will become apparent from the specification, accompanying drawings, and claims.

### BRIEF DESCRIPTION OF DRAWINGS

To more clearly illustrate the technical solutions in the embodiments of this application or in the conventional technologies, the accompanying drawings required for use in the description of the embodiments or the conventional technologies are briefly introduced below. Obviously, the accompanying drawings in the following description are merely embodiments of this application. For those of ordinary skill in the art, other drawings can also be obtained based on the disclosed drawings without creative efforts.
FIG. 1 is a schematic structural cross-sectional view of a composite thermal insulation pad according to an embodiment of this application;
FIG. 2 is a schematic structural cross-sectional view of a composite thermal insulation pad according to another embodiment of this application;
FIG. 3 is a schematic structural cross-sectional view of a composite thermal insulation pad according to another embodiment of this application;
FIG. 4 is a schematic structural front view of an encapsulated thermal conduction layer of the composite thermal insulation pad shown in FIG. 2;
FIG. 5 is a schematic structural cross-sectional view of a composite thermal insulation pad according to another embodiment of this application;
FIG. 6 is a schematic structural cross-sectional view of a composite thermal insulation pad according to another embodiment of this application;
FIG. 7 is a schematic structural cross-sectional view of a composite thermal insulation pad according to another embodiment of this application;
FIG. 8 is a schematic structural cross-sectional view of a composite thermal insulation pad according to another embodiment of this application;
FIG. 9 is a schematic structural cross-sectional view of a composite thermal insulation pad according to another embodiment of this application;
FIG. 10 is a schematic structural cross-sectional view of a composite thermal insulation pad according to another embodiment of this application;
FIG. 11 is a schematic three-dimensional structural diagram of a composite thermal insulation pad according to another embodiment of this application;
FIG. 12 is a schematic cross-sectional view of the composite thermal insulation pad shown in FIG. 11 along direction A-A;
FIG. 13 is a schematic structural cross-sectional view of a composite thermal insulation pad according to another embodiment of this application;
FIG. 14 is a schematic structural diagram of a battery according to an embodiment of this application;
FIG. 15 is a schematic structural exploded view of a battery according to an embodiment of this application;
FIG. 16 is a schematic structural diagram of a battery cell in a battery according to an embodiment;
FIG. 17 is a schematic diagram of an electric apparatus using a battery as a power source according to an embodiment of this application;
FIG. 18 is a thermal insulation performance curve graph of composite thermal insulation pads prepared in Example 1 and Example 2;
FIG. 19 is a compressive stress-strain curve graph of an individual encapsulated thermal conduction layer serving as a sample in Example 1;
FIG. 20 is a compressive stress-strain curve graph of an individual first thermal insulation layer serving as a sample in Example 1;
FIG. 21 is a compressive stress-strain curve graph of an entire composite thermal insulation pad serving as a sample in Example 1;
FIG. 22 is a SEM image of a phase change material layer in an encapsulated thermal conduction layer in a composite thermal insulation pad in Example 4; and
FIG. 23 is an EDS image of a phase change material layer in an encapsulated thermal conduction layer in a composite thermal insulation pad in Example 4.

### Description of reference signs:

10. composite thermal insulation pad; 11. thermal insulation pad body; 111. first thermal insulation layer; 112. second thermal insulation layer; 12. thermal conduction layer; 121. phase change material layer; 1211. thermal insulation substrate; 1211a. a side edge of thermal insulation substrate; 122. intermediate layer; 131. first encapsulation layer; 131a. inner wall of encapsulation cavity; 1311. first encapsulation edge portion; 1312. weak portion; 132. second encapsulation layer; 1321. second encapsulation edge portion; 133. third encapsulation layer; 141. first encapsulation frame; 142. second encapsulation frame; 151. first adhesive layer; 152. second adhesive layer; 17. strain detection member; 172. external lead wire;
20. battery cell; 21. shell; 22. electrode assembly; 23. cover plate;
30. battery; and
40. electric apparatus.

### DESCRIPTION OF EMBODIMENTS

To make the above objectives, features, and advantages of this application more obvious and understandable, the specific embodiments of this application are described in detail below in conjunction with the accompanying drawings. In the following description, many specific details are set forth to facilitate a full understanding of this application. However, this application can be implemented in many ways different from those described herein, and those skilled in the art can make similar improvements without departing from the connotation of this application. Therefore, this application is not limited by the specific embodiments disclosed below.

In the description of this application, it should be understood that if the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like appear, the orientation or positional relationship indicated by these terms is based on the orientation or positional relationship shown in the accompanying drawings, which is only for the convenience of describing this application and simplifying the description, rather than indicating or implying that the apparatus or element referred to must have a specific orientation or be constructed and operated in a specific orientation, and therefore cannot be understood as a limitation on this application.

In addition, if the terms "first" and "second" appear, these terms are used for descriptive purposes only and cannot be understood as indicating or implying relative importance or implicitly indicating the number of technical features indicated. Thus, a feature defined with "first" or "second" may explicitly or implicitly include at least one of such features. In the description of this application, if the term "a plurality of" appears, the "a plurality of" means at least two, such as two or three, unless otherwise expressly and specifically limited.

In this application, unless otherwise expressly specified and limited, if descriptions such as a first feature being "on" or "under" a second feature appear, the meaning may be that the first and second features are in direct contact, or the first and second features are in indirect contact through an intermediate medium. Moreover, a first feature being "above", "over" and "on" a second feature may mean that the first feature is directly above or obliquely above the second feature, or simply means that the first feature has a higher horizontal height than the second feature. A first feature being "below", "under" and "beneath" a second feature may mean that the first feature is directly below or obliquely below the second feature, or simply means that the first feature has a lower horizontal height than the second feature.

It should be noted that if an element is referred to as being "fixed to" or "disposed on" another element, it may be directly on the another element or there may be an intervening element. If an element is considered to be "connected to" another element, it may be directly connected to the another element or there may be an intervening element. If present, the terms "vertical", "horizontal", "upper", "lower", "left", "right", and similar expressions used in this application are for illustrative purposes only and do not represent the only implementation.

The "range" disclosed in this application is defined in the form of a lower limit and an upper limit, and a given range is defined by selecting a lower limit and an upper limit, where the selected lower limit and upper limit define the boundaries of a particular range. A range defined in this way may include endpoints or may not include endpoints, and the endpoints can be arbitrarily combined, that is, any lower limit can be combined with any upper limit to form a range. For example, if ranges of 60 to 120 and 80 to 110 are listed for a particular parameter, ranges of 60 to 110 and 80 to 120 are also contemplated. In addition, if minimum range values 1 and 2 are listed, and if maximum range values 3, 4, and 5 are listed, the following ranges are all contemplated: 1 to 3, 1 to 4, 1 to 5, 2 to 3, 2 to 4, and 2 to 5. In this application, unless otherwise specified, a numerical range "a to b" represents an abbreviated representation of any combination of real numbers between a and b, where a and b are both real numbers. For example, a numerical range "0 to 5" means that all real numbers between "0 to 5" have been listed herein, and "0 to 5" is just an abbreviated representation of combinations of these numbers. In addition, when a parameter is expressed as an integer greater than or equal to 2, it is equivalent to disclosing that the parameter is, for example, an integer 2, 3, 4, 5, 6, 7, 8, 9, 10, 11, 12, or the like.

At present, from the perspective of market development, the application of batteries is becoming more and more widespread. Batteries, especially traction batteries, are not only used in energy storage power systems such as hydropower, thermal power, wind power, and solar power stations, but are also widely used in electric transportation tools such as electric bicycles, electric motorcycles, and electric vehicles, as well as other fields. With the continuous expansion of the application fields of traction batteries, the market demand for traction batteries is also constantly increasing.

A battery cell is the smallest unit that constitutes a battery. A battery may include one or a plurality of battery cells, and the plurality of battery cells may be connected in series, in parallel, or in series-parallel. Being connected in series-parallel refers to a combination of a series connection and a parallel connection of the plurality of battery cells.

After being connected to each other and arranged in a specific order, the plurality of battery cells can be directly accommodated in a box, to be assembled into a battery. Alternatively, a plurality of battery cells are first assembled into a battery module, then a plurality of battery modules are connected to each other to form an entirety, and ultimately the entirety formed by the battery modules is accommodated in the box to form a battery.

To address the above-mentioned issue of thermal runaway of a battery, the degree of damage and risks to the entire battery are to be reduced.

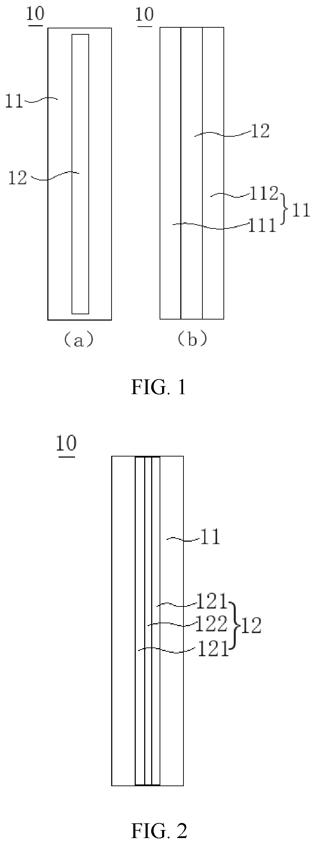

Referring to FIG. 1, an embodiment of this application provides a composite thermal insulation pad 10, including a thermal insulation pad body 11 and a thermal conduction layer 12. The thermal conduction layer 12 is disposed within the thermal insulation pad body 11.

It can be understood that the thermal conduction layer 12 is disposed within the thermal insulation pad body 11, which includes but is not limited to the following forms: the thermal conduction layer 12 is entirely surrounded by the thermal insulation pad body 11 (as shown in (a) in FIG. 1), for example, the thermal conduction layer 12 is completely embedded within the thermal insulation pad body 11; and the thermal conduction layer 12 is partially surrounded by the thermal insulation pad body 11 but the thermal conduction layer 12 is located inside the thermal insulation pad body 11 (as shown in (b) in FIG. 1), for example, the thermal conduction layer 12 may alternatively be located between two thermal insulation layers, and the thermal conduction layer 12 does not protrude from the thermal insulation layers. The two thermal insulation layers here constitute the thermal insulation pad body 11.

In the above composite thermal insulation pad 10 of this application, on one hand, the thermal insulation pad body 11 can play a role of thermal insulation, and on the other hand, the thermal conduction layer 12 is disposed within the thermal insulation pad body 11, so that when heat is conducted to the interior of the thermal insulation pad body 11 and reaches the thermal conduction layer 12, the thermal conduction layer 12 can rapidly and uniformly disperse the heat to the surroundings, thereby playing a role of rapid heat dissipation. When the composite thermal insulation pad is applied to a battery, under a normal operating state of the battery, the thermal insulation pad body 11 mainly plays a role of thermal insulation; and when the battery is abnormal due to heat generation, the thermal conduction layer 12 can play a role of rapid diffusion, thereby achieving an effect of retarding thermal runaway of the battery.

In some embodiments, the thermal conduction layer 12 includes one or a stack of at least two of a phase change material layer 121, a metal layer, and a graphene film layer. When heat is conducted to the thermal conduction layer 12, the phase change material layer 121 therein receives the heat and transfers the heat inward, that is, the heat is absorbed by the phase change material layer 121, thereby playing a role of rapid heat dissipation. The metal layer and the graphene film layer therein, as good conductors for heat, can rapidly and uniformly disperse the heat to the surroundings, thereby playing a role of rapid heat dissipation. In addition, the metal layer also has a good effect of suppressing thermal radiation, thereby further improving the thermal insulation effect of the composite thermal insulation pad.

For example, the thermal conduction layer 12 may include any one of the phase change material layer 121, the metal layer, and the graphene film layer, or may include a stack of the phase change material layer 121 and any one of the metal layer and the graphene film layer, or may include a stack of the metal layer and the graphene film layer, or may include a stack of the phase change material layer 121, the metal layer, and the graphene film layer.

Referring to FIG. 2, in some embodiments, the thermal conduction layer 12 includes at least two phase change material layers 121 disposed in a stacked manner, and an intermediate layer 122 is disposed between at least two phase change material layers 121. The intermediate layer 122 includes one or a stack of two of the metal layer and the graphene film layer.

It can be understood that the number of the phase change material layers 121 in the thermal conduction layer 12 may be greater than 2. Further, the intermediate layer 122 is disposed between every two adjacent phase change material layers 121.

Further, when the intermediate layer 122 includes a stack of the metal layer and the graphene film layer, the metal layer may be in contact with the phase change material layers 121, or the graphene film layer may be in contact with the phase change material layers 121, or the metal layer may be in contact with one phase change material layer 121 and the graphene film layer may be in contact with the other phase change material layer 121.

Further, the metal layer includes a pure metal layer or an alloy layer of at least one of copper, aluminum, and iron. In an example, the metal layer is a copper metal layer or an aluminum metal layer, where the copper metal layer has a good effect of suppressing thermal radiation.

In this way, the intermediate body is disposed between two phase change material layers 121. When one side of the composite thermal insulation pad is in contact with or close to a heat source, the thermal insulation pad body 11 first plays a role of thermal insulation; and when heat is conducted to the phase change material layer 121 on that side, the phase change material layer 121 absorbs heat and undergoes a phase change, thereby cooling the entire composite thermal insulation pad, or retarding further diffusion of the heat. When heat is further conducted to the intermediate layer 122 therein, the intermediate layer 122 can rapidly diffuse the heat along its surface. On one hand, due to the thermal conduction effect of the intermediate layer 122, a larger area of phase change can be triggered in the phase change material layer 121 located on the other side of the intermediate layer 122 to realize heat absorption and cooling; and on the other hand, the heat can also be diffused to the surroundings, further improving the thermal insulation effect of the composite thermal insulation pad.

In some embodiments, a ratio of a thickness of the intermediate layer 122 to a total thickness of the phase change material layers 121 is (0.3 to 5):100. Generally, the thickness of the intermediate layer 122 is smaller, while the thickness of the phase change material layer 121 is larger. In an example, a thickness ratio of the intermediate layer 122 to the phase change material layer 121 may be 0.3:100, 0.5:100, 0.8:100, 1:100, 2:100, 3:100, 4:100, or 5:100. In some examples, the thickness ratio may be a range formed by any two of these point values. The following is similar.

In some embodiments, the thickness of the intermediate layer 122 is 0.02 mm to 0.04 mm. In an example, the thickness of the intermediate layer 122 may be 0.02 mm, 0.03 mm, or 0.04 mm. For example, the intermediate layer 122 is a metal layer.

Herein, various thicknesses in the composite thermal insulation pad may be detected according to the following method. A device s used is: a Mitutoyo 547-301 thickness gauge, with device accuracy: ≤ 0.01 mm. During detection, detection surfaces of the composite thermal insulation pad and the Mitutoyo 547-301 thickness gauge are both required to be parallel to the ground, a total of five places including four corners and a central region are taken as detection positions, and an average value of five places is taken as a detection value.

In some embodiments, an area of a projection of the intermediate layer 122 on the phase change material layer 121 accounts for 90% to 100% of an area of the phase change material layer 121. It can be understood that the area of the projection of the intermediate layer 122 on the phase change material layer 121 refers to an area of a projection perpendicular to a thickness direction. Thus, the area of the projection of the intermediate layer 122 on the phase change material layer 121 is equal to or smaller than the area of the phase change material layer 121, so that the intermediate layer 122 is covered by the phase change material layer 121, thereby giving full play to the heat transfer effect of the intermediate layer 122 and trigger a larger area of phase-change heat absorption of the phase change material layer 121.

In some embodiments, the phase change material includes first paraffin wax with a melting point of 100°C to 110°C.

In some embodiments, the phase change material further includes second paraffin wax with a melting point of 110°C to 120°C.

Further, a mass ratio of the first paraffin wax to the second paraffin wax is 33:(37 to 53). Thus, through the cooperation of the two types of paraffin wax at a specific mass ratio, a phase change temperature of the phase change material layer 121 may be controlled at about 105°C to 110°C, which is particularly suitable for battery cells with thermal runaway below 600°C, for example, lithium iron phosphate battery cells used for energy storage. The thermal runaway of lithium iron phosphate battery cells is milder than that of NCM battery cells.

Further, a molecular formula of the first paraffin wax is CₘH₂ₘ₊₂, where 38≤m≤43.

Further, a molecular formula of the second paraffin wax is C_{w}H_{2w+2}, where 57≤w≤64.

In some embodiments, the phase change material further includes third paraffin wax with a melting point of 63°C to 72°C.

Further, a mass ratio of the third paraffin wax, the first paraffin wax, and the second paraffin wax is (20 to 25):(34 to 57):(60 to 63). Thus, through the cooperation of the three types of paraffin wax at a specific mass ratio, the phase change temperature of the phase change material layer 121 may be controlled at about 100°C, which is particularly suitable for batteries with a self-heating temperature of about 110°C, such as NCM battery cells. After thermal runaway of NCM battery cells, the temperature rises rapidly. Therefore, the phase change temperature of the phase change material layer 121 is controlled at about 100°C, so that when the first battery cell undergoes thermal runaway, due to the presence of different proportions of paraffin components in the phase change material layer 121, a gradient melting situation occurs, enabling a cold surface temperature of the composite thermal insulation pad to be controlled below 100°C, and enabling a major surface temperature of a battery cell adjacent to the battery cell undergoing thermal runaway to be controlled below 100°C. This adjacent battery cell does not undergo a self-heating reaction. In this way, the composite thermal insulation pad can effectively retard thermal runaway.

Further, a molecular formula of the third paraffin wax is CₙH₂ₙ₊₂, where 28≤n≤33.

In some embodiments, the thermal insulation pad body 11 is provided with a hollow cavity, and the thermal conduction layer 12 is disposed in the hollow cavity.

In a specific example, the thermal conduction layer 12 includes a solid phase change material layer 121, and the solid phase change material layer 121 is disposed in the hollow cavity. The phase change material layer 121 is solid and disposed in the hollow cavity, and therefore does not require encapsulation at room temperature. The solid phase change material layer 121 does not affect the thermal insulation performance of the thermal insulation pad body 11 under normal conditions, while the phase change material located in the hollow cavity inside the thermal insulation pad body 11 can achieve a certain heat absorption effect.

It can be understood that the thermal conduction layer 12 and the thermal insulation pad body 11 may be encapsulated, so that the thermal conduction layer 12 and the thermal insulation pad body 11 are protected or physically isolated.

In some embodiments, the composite thermal insulation pad further includes an encapsulation layer. The encapsulation layer is disposed on a peripheral side of at least one of the thermal conduction layer 12 and the thermal insulation pad body 11.

It can be understood that the peripheral sides of the thermal conduction layer 12 and the thermal insulation pad body 11 are respectively the entire outer peripheral surface of the thermal conduction layer 12 and the entire outer peripheral surface of the thermal insulation pad body 11 when the thermal conduction layer 12 and the thermal insulation pad body 11 are each an independent entirety. The shared peripheral side of the thermal conduction layer 12 and the thermal insulation pad body 11 is the entire outer peripheral surface of an entirety formed by the thermal conduction layer 12 and the thermal insulation pad body 11.

It can be understood that the encapsulation layer may be disposed on the peripheral side of one of the thermal conduction layer 12 and the thermal insulation pad body 11, or on the shared peripheral side formed by both, or a combination of these solutions.

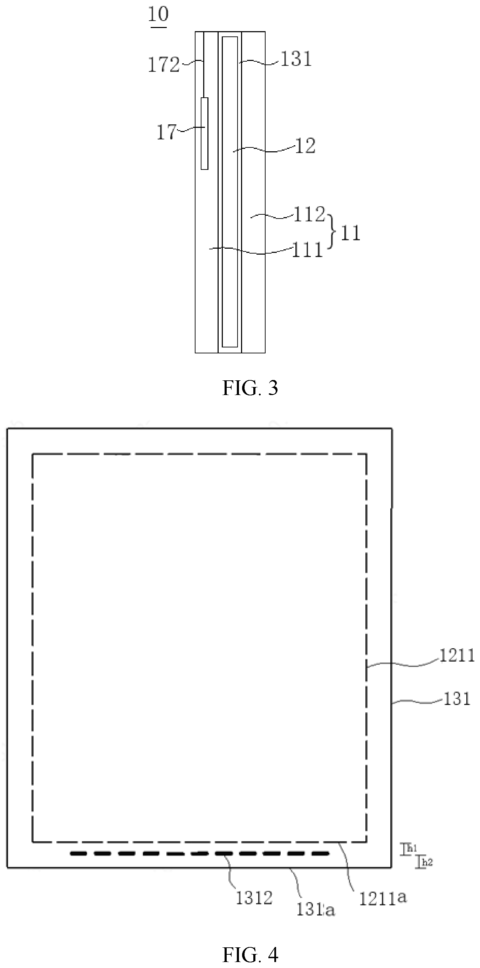

Referring to FIG. 3, in some embodiments, the encapsulation layer includes a first encapsulation layer 131. The first encapsulation layer 131 is disposed on the peripheral side of the thermal conduction layer 12, constituting an encapsulated thermal conduction layer. The encapsulated thermal conduction layer is disposed within the thermal insulation pad body 11. Thus, the first encapsulation layer 131 physically isolates the thermal conduction layer 12 from the thermal insulation pad body 11, and the thermal conduction layer 12 does not affect the thermal insulation performance of the thermal insulation pad body 11. It can be understood that the first encapsulation layer 131 individually encapsulates the thermal conduction layer 12 and does not encapsulate the thermal insulation pad body 11.

In this specific example, since the thermal conduction layer 12 is provided with the first encapsulation layer 131, the thermal conduction layer 12 may include a solid, liquid, or semi-solid phase change material layer 121. Before the first encapsulation layer 131 becomes ineffective, the phase change material is not diffused into the thermal insulation pad body 11 to form a thermal conduction path, so that the structure and thermal insulation performance of the thermal insulation pad body 11 are not changed. Certainly, the thermal conduction layer 12 may further include the above intermediate layer 122.

Optionally, the material of the phase change material layer 121 includes but is not limited to crystalline hydrated salt, phase change molten salt, paraffin, silicone oil, silica sol, alumina sol, silica-alumina sol, fatty acid, alcohol, and other substances capable of undergoing phase-change heat absorption, enabling the phase change material layer 121 to have a wider application range, thereby providing better thermal insulation performance. Further, the crystalline hydrated salt includes but is not limited to at least one of a sodium carbonate crystalline hydrated salt and a calcium chloride crystalline hydrated salt, for example, at least one of sodium carbonate decahydrate (Na₂CO₃·10H₂O) and calcium chloride hexahydrate (CaCl₂·6H₂O). Alumina sol includes aluminum hydroxide sol.

In addition, because the phase change material in the phase change material layer 121 undergoes a phase change, for example, a solid phase change material at room temperature turns into a liquid state after absorbing heat, the first encapsulation layer 131 can also play a role in isolating the liquid phase change material after the phase change from the thermal insulation pad body 11.

Moreover, in some preparation processes, the phase change material inevitably contains moisture. Using the structure in which the phase change material layer 121 is disposed in an encapsulation cavity of the first encapsulation layer 131 can avoid adverse effects on the battery caused by moisture overflow.

In some examples, the encapsulation layer may be formed by encapsulation of two encapsulation films, for example, by edge pressing or edge wrapping. Therefore, an encapsulation edge portion is provided at an edge of each encapsulation layer.

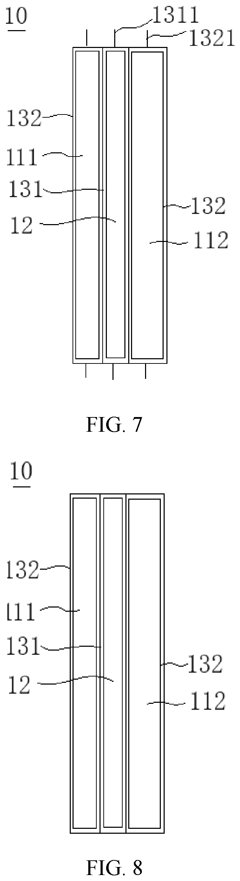

In some embodiments, the first encapsulation layer 131 has a first encapsulation edge portion (as shown in FIG. 7). Further, the first encapsulation edge portion forms an edge-pressed structure by edge pressing.

Referring to FIG. 3, further, the first encapsulation edge portion may alternatively be folded and located between the thermal conduction layer 12 and the thermal insulation pad body 11. In this way, each edge of the encapsulation film forms an edge-wrapped structure, which can maximize the utilization of the area of the first encapsulation layer 131 as compared to the above edge-pressed structure. In other words, if the encapsulation film with the same size adopts an edge-wrapped structure, the encapsulation film can be filled with a larger area of thermal conduction layer 12, which can increase a contact area between the composite thermal insulation pad 10 and a major surface of the battery, thereby improving the thermal insulation performance.

In some embodiments, the first encapsulation layer 131 is an aluminum-plastic film or a polymer encapsulation film.

Further, the first encapsulation layer 131 is an aluminum-plastic film. Specifically, the first encapsulation layer 131 includes a polypropylene layer, an aluminum layer, and a nylon layer stacked from inside to outside.

Further, the polymer encapsulation film may be a PET film (polyethylene terephthalate film) or a PI film (polyimide film).

In some embodiments, a thickness of the first encapsulation layer 131 is 0.1 mm to 0.3 mm, for example, 0.1 mm, 0.15 mm, 0.2 mm, or 0.3 mm, optionally 0.1 mm to 0.15 mm or 0.2 mm to 0.3 mm.

Referring to FIG. 4, in some embodiments, the thermal conduction layer 12 includes a phase change material layer 121, and a weak portion is disposed on a region of the first encapsulation layer 131 that constitutes the encapsulation cavity. Since the position of the weak portion is a weak region, when the phase change material layer 121 in the thermal conduction layer 12 absorbs a large amount of heat, the phase change material in the phase change material layer 121 undergoes a phase change, causing the first encapsulation layer 131 to bulge. This allows the first encapsulation layer 131 to rupture at the bulge from the weak portion in a timely manner during thermal runaway, further reducing the degree of damage to the entire battery caused by thermal runaway.

It can be understood that the weak portion 1312 on the first encapsulation layer 131 is a region with lower strength on the first encapsulation layer 131.

In some embodiments, the weak portion 1312 is a region with smaller thickness and/or lower material strength. In other words, the weak portion 1312 may be a region with a smaller thickness but unchanged material strength, which can be formed by locally thinning the first encapsulation layer 131. The weak portion 1312 may alternatively be a region with an unchanged thickness but lower material strength, which can be formed by locally lowering the material strength of the first encapsulation layer 131, for example, by using materials of different strengths. The weak portion 1312 may alternatively be a region with a smaller thickness and lower material strength. It can be understood that the material strength here refers to the strength of the material itself.

Further, the weak portion 1312 is a scored region formed on the first encapsulation layer 131. It can be understood that the scored region is formed by thinning a surface of the first encapsulation layer 131 through scoring, and a thickness of the scored region is thinner.

Further, the weak portion 1312 may be disposed on an outer side or inner side of the first encapsulation layer 131. The outer side refers to a surface of the first encapsulation layer 131 away from the phase change material layer 121, and the inner side refers to a surface of the first encapsulation layer 131 close to the phase change material layer 121.

Further, a depth of the weak portion 1312 accounts for 15% to 50% of the thickness of the first encapsulation layer 131, for example, 15%, 20%, 30%, 35%, 40%, 45%, or 50%. Controlling this thickness-based proportion allows the encapsulation layer to achieve both a good isolation effect played when no bulge rupture is needed and a good timely bulge rupture effect during thermal runaway.

Further, the aluminum-plastic film includes an aluminum foil layer and plastic film layers disposed on two surfaces of the aluminum foil layer.

Further, when the first encapsulation layer 131 is an aluminum-plastic film, the weak portion penetrates from a surface of the aluminum-plastic film to 30% to 60% of a thickness of the aluminum foil layer, which may be, for example, 30%, 40%, 50%, or 60%. The weak portion is controlled to penetrate into the aluminum foil layer but not through the aluminum foil layer, and is also controlled to penetrate into 30% to 60% of the thickness of the aluminum foil layer, so that the encapsulation layer achieves both a better isolation effect played when no bulge rupture is needed and a better timely bulge rupture effect during thermal runaway.

The plastic film layer in the aluminum-plastic film may include but is not limited to at least one of a polypropylene layer, a nylon layer, and a polyester layer.

In some examples, the first encapsulation layer 131 includes a polypropylene layer, an aluminum foil layer, a nylon layer, and a polyester layer stacked from inside to outside. In a specific example, thicknesses of the polypropylene layer, the aluminum foil layer, the nylon layer, and the polyester layer are 80 µm, 40 µm, 15 µm, and 6 µm respectively, and the weak portion 1312 may penetrate from one side of the polyester layer into a position at half the thickness of the aluminum foil layer.

In some embodiments, the composite thermal insulation pad 10 further includes an adhesive layer, and the thermal insulation pad body 11 is connected to the first encapsulation layer 131 through the adhesive layer.

In some embodiments, a thickness of the thermal conduction layer 12 accounts for 70% to 96% of a total thickness of the encapsulated thermal conduction layer. In an example, the thickness proportion may be 70%, 75%, 80%, 86%, 90%, 92%, 95%, or 96%, which may further be 86% to 96%.

It can be understood that the total thickness of the encapsulated thermal conduction layer is a total thickness of the first encapsulation layer 131 and the thermal conduction layer 12 on one side and the first encapsulation layer 131 on the other side in a thickness direction.

In some embodiments, the thickness of the encapsulated thermal conduction layer is 1 mm to 6 mm, optionally 1 mm to 4 mm. In an example, it may be 1 mm, 1.5 mm, 2 mm, 2.5 mm, 3 mm, 3.5 mm, 4 mm, 5 mm, or 6 mm, more optionally 1.5 mm to 3.5 mm.

In some embodiments, a ratio of the thickness of the encapsulated thermal conduction layer to a thickness of the thermal insulation pad body 11 is (0.15 to 12):1, further (0.5 to 8):1. In an example, it may be 0.15:1, 0.5:1, 1:1, 2:1, 4:1, 6:1, 8:1, 10:1, or 12:1.

It can be understood that when the encapsulated thermal conduction layer is completely embedded in the thermal insulation pad body 11, the thickness of the thermal insulation pad body 11 is greater than the thickness of the encapsulated thermal conduction layer. When the encapsulated thermal conduction layer is located between two thermal insulation layers and the thermal conduction layer 12 does not extend beyond the thermal insulation layers or in other ways, the thickness of the encapsulated thermal conduction layer may be greater than the thickness of the thermal insulation pad body 11, or less than or equal to the thickness of the thermal insulation pad body 11.

Further, the thickness of the thermal insulation pad body 11 is 0.5 mm to 8 mm. In an example, it may be 0.5 mm, 1 mm, 2 mm, 3 mm, 4 mm, 5 mm, 6 mm, 7 mm, or 8 mm; optionally 1 mm to 8 mm.

In some embodiments, a length dimension and a width dimension of the thermal insulation pad body 11 respectively match a length dimension and a width dimension of the encapsulated thermal conduction layer, that is, the length dimensions and the width dimensions are equal. In some other embodiments, at least one of the length dimension and the width dimension of the thermal insulation pad body 11 is greater than the corresponding length dimension or width dimension of the encapsulated thermal conduction layer.

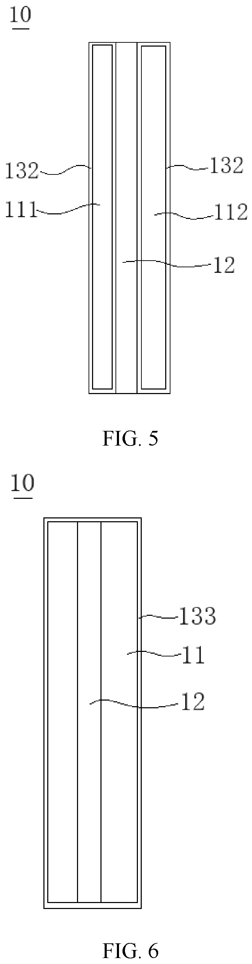

Referring to FIG. 5, in some embodiments, the encapsulation layer further includes a second encapsulation layer 132. The second encapsulation layer 132 is disposed on the peripheral side of the thermal insulation pad body 11, constituting an encapsulated thermal insulation layer. In other words, the encapsulated thermal insulation layer includes the thermal insulation pad body 11 and the second encapsulation layer 132, and the second encapsulation layer 132 is disposed on the peripheral side of the thermal insulation pad body 11. Correspondingly, the second encapsulation layer 132 of the encapsulated thermal insulation layer is in contact with the thermal conduction layer 12.

It can be understood that the second encapsulation layer 132 individually encapsulates the thermal insulation pad body 11 and does not encapsulate the thermal conduction layer 12.

The second encapsulation layer 132 can provide a certain encapsulation and protection effect for the thermal insulation pad body 11, and can further reduce the problem that impurities enter the thermal insulation pad body 11 to form a thermal conduction path and thus affects the thermal insulation performance, thereby further improving the thermal insulation performance of the above composite thermal insulation pad 10. When applied to a battery, the second encapsulation layer 132 has a good effect of retarding thermal runaway of the battery.

Similarly, the second encapsulation layer 132 has a second encapsulation edge portion 1321 (as shown in FIG. 7) that can form an edge-pressed structure by edge pressing.

Further, the second encapsulation edge portion 1321 may alternatively be folded and located between the encapsulated thermal insulation layer and the thermal conduction layer 12, so that each edge of the encapsulation film forms an edge-wrapped structure.

Further, the second encapsulation layer 132 is an aluminum-plastic film or a polymer encapsulation film, including but not limited to a PET film (polyethylene terephthalate film) or a PI film (polyimide film).

In a specific example, the first encapsulation layer 131 is an aluminum-plastic film, and the second encapsulation layer 132 is a polymer encapsulation film.

Further, a thickness of the second encapsulation layer 132 is 0.05 mm to 0.1 mm, optionally 0.07 mm to 0.09 mm, and further 0.08 mm±0.005 mm.

Referring to FIG. 6, in some embodiments, the encapsulation layer further includes a third encapsulation layer 133. The third encapsulation layer 133 is disposed on the shared peripheral side of the thermal insulation pad body 11 and the thermal conduction layer 12. In other words, unlike the manner in which the first encapsulation layer 131 is individually disposed on the thermal conduction layer 12 and the second encapsulation layer 132 is individually disposed on the thermal insulation pad body 11, the third encapsulation layer 133 is partially disposed on the thermal insulation pad body 11 and partially disposed on the thermal conduction layer 12 to encapsulate both the thermal insulation pad body 11 and the thermal conduction layer 12. That is, the third encapsulation layer 133 is disposed on the shared peripheral side of the thermal insulation pad body 11 and the thermal conduction layer 12, constituting an encapsulated thermal insulation layer. In this way, the entire composite thermal insulation pad is encapsulated and protected by the third encapsulation layer 133.

It can be understood that if the thermal conduction layer 12 is embedded in the thermal insulation pad body 11, the shared peripheral side of the thermal insulation pad body 11 and the thermal conduction layer 12 is a surface of the thermal insulation pad body 11 that is exposed outside, which does not include an inner surface in contact with the thermal conduction layer 12.

Further, the third encapsulation layer 133 is an aluminum-plastic film or a polymer encapsulation film, including but not limited to a PET film (polyethylene terephthalate film) or a PI film (polyimide film).

In a specific example, the third encapsulation layer 133 is an aluminum-plastic film, or the third encapsulation layer 133 is a polymer encapsulation film.

Further, a thickness of the third encapsulation layer 133 is 0.05 mm to 0.1 mm, optionally 0.07 mm to 0.09 mm, and further 0.08 mm±0.005 mm.

It can be understood that in a specific example, the encapsulation layer may include only the third encapsulation layer 133, and do not include the above first encapsulation layer 131 and second encapsulation layer 132.

Further, in a specific example, the encapsulation layer may include both the above first encapsulation layer 131 and third encapsulation layer 133. In this way, the phase change material layer 121 within the first encapsulation layer 131 may adopt at least one of a liquid phase change material, a semi-solid phase change material, or a solid phase change material.

Further, in another specific example, the encapsulation layer may include both the above second encapsulation layer 132 and third encapsulation layer 133.

Referring to FIG. 7, in another specific example, the encapsulation layer may include both the above first encapsulation layer 131 and second encapsulation layer 132. A first encapsulation edge portion 1311 of the first encapsulation layer 131 and a second encapsulation edge portion 1321 of the second encapsulation layer 132 may adopt edge-pressed structures. Referring to FIG. 8, the first encapsulation edge portion 1311 of the first encapsulation layer 131 and the second encapsulation edge portion 1321 of the second encapsulation layer 132 may adopt edge-wrapped structures.

Further, in still another specific example, the encapsulation layer includes all the above first encapsulation layer 131, second encapsulation layer 132, and third encapsulation layer 133. It can be understood that when the third encapsulation layer 133 is provided, it is preferred for the first encapsulation edge portion 1311 of the first encapsulation layer 131 and the second encapsulation edge portion 1321 of the second encapsulation layer 132 to adopt edge-wrapped structures, which are folded between layer structures of the composite thermal insulation pad 10, thereby facilitating the encapsulation operation of the third encapsulation layer 133.

It can be understood that the above first encapsulation layer 131, second encapsulation layer 132, and third encapsulation layer 133 may adopt any one or a combination of the above manners according to different scenario requirements.

Still referring to FIG. 3, in some embodiments, the thermal insulation pad body 11 includes a first thermal insulation layer 111 and a second thermal insulation layer 112 located on two sides of the thermal conduction layer 12 in the thickness direction, so that the thermal conduction layer 12 is sandwiched within the thermal insulation pad body 11. In other words, the first thermal insulation layer 111, the thermal conduction layer 12, and the second thermal insulation layer 112 are stacked in sequence. The thermal conduction layer 12 is disposed between the first thermal insulation layer 111 and the second thermal insulation layer 112. The thermal conduction layer 12 can absorb heat transferred from the thermal insulation layers on the two sides and diffuse the heat to the surroundings, thereby further improving the thermal insulation performance and heat dissipation performance of the above composite thermal insulation pad.

Further, a strain of the first thermal insulation layer 111 and the second thermal insulation layer 112 under a stress of 0.5 MPa to 5 MPa is 25% to 70%. Still further, a strain of the samples under a stress of 0.5 MPa to 3 MPa is 25% to 70%. More further, a strain of the samples under a stress of 0.5 MPa to 2.8 MPa is 29% to 57%. The first thermal insulation layer and the second thermal insulation layer have specific compressibility and can absorb battery swelling when the battery swells, thereby further improving the service life and thermal insulation performance of the thermal insulation pad.

The stress-strain test herein is performed according to the following test method: A press is used to compress a to-be-tested sample at an inlet stress of 0.008 MPa at a compression rate of 2 mm/min of the device to a specific pressure, and a compressive stress-strain curve is recorded. The test is performed in an environment with a temperature of 23°C±5°C, a relative humidity of 45% to 75%, and an atmospheric pressure of 86 kPa to 106 kPa.

A stress test device is a pressure tester from Xiamen Yinghaoda, with a measurement pressure range of 1 KN to 8 KN and a measurement area of 300*300 mm. Stress = load force / sample area.

Strain is a percentage value of a thickness change of the sample under a stress relative to an initial thickness of the sample. The thickness change of the sample under stress is a displacement relative to an initial position that is recorded by a micrometer or pressure tester. An initial thickness of the sample is measured using the following device: a Mitutoyo 547-301 thickness gauge, with a device accuracy: ≤ 0.01 mm. During detection, detection surfaces of the composite thermal insulation pad and the Mitutoyo 547-301 thickness gauge are both required to be kept parallel to the ground, a total of five places including four corners and a central region are taken as detection positions, and an average value of the five places is taken as a detected value. That is, strain = displacement recorded by micrometer or pressure tester / initial thickness of sample.

Initial data of a load-displacement test that is outputted by the stress test device is converted into stress-strain data, and then a compressive stress-strain curve is outputted.

Further, the composite thermal insulation pad 10 includes a first thermal insulation layer 111, a second thermal insulation layer 112, and a thermal conduction layer 12 sandwiched between the first thermal insulation layer 111 and the second thermal insulation layer 112; and a strain of the composite thermal insulation pad 10 under a stress of 0.5 MPa to 4 MPa is 15% to 35%. In this way, the composite thermal insulation pad 10 achieves both good compressibility and thermal insulation performance, so that when it is used as a thermal insulation structure in batteries, it has good thermal insulation performance, prevents thermal runaway propagation, and also absorbs battery swelling, thereby reducing the risk caused by battery swelling.

Further, in some examples, the thermal conduction layer 12 and the above first encapsulation layer 131 form the above encapsulated thermal conduction layer.

Further, in some examples, a peripheral side of the first thermal insulation layer 111 is provided with the above second encapsulation layer 132. Further, in some examples, a peripheral side of the second thermal insulation layer 112 is provided with the above second encapsulation layer 132.

Further, in some examples, an entirety formed by the first thermal insulation layer 111, the thermal conduction layer 12, and the second thermal insulation layer 112 is provided with the above third encapsulation layer 133.

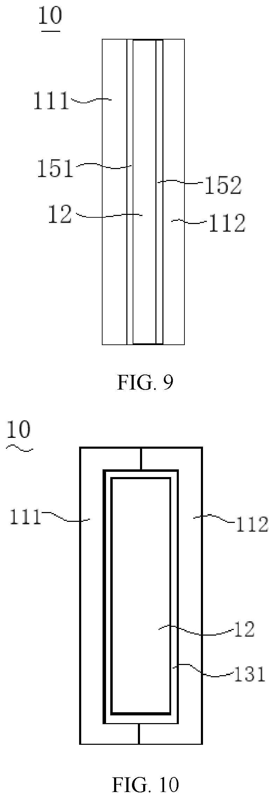

Referring to FIG. 9, in some embodiments, the composite thermal insulation pad 10 further includes an adhesive layer, and at least one of the first thermal insulation layer 111 and the second thermal insulation layer 112 of the thermal insulation pad body 11 is connected to the thermal conduction layer 12 through the adhesive layer. Further, the adhesive layer includes a first adhesive layer 151 and a second adhesive layer 152. The first thermal insulation layer 111 is connected to the thermal conduction layer 12 through the first adhesive layer 151; and the second thermal insulation layer 112 is connected to the thermal conduction layer 12 through the second adhesive layer 152. In this way, the first thermal insulation layer 111, the encapsulated thermal conduction layer, and the second thermal insulation layer 112 of the composite thermal insulation pad 10 are connected and fixed in the thickness direction through the adhesive layer.

Further, materials of the first adhesive layer 151 and the second adhesive layer 152 are each independently an adhesive layer made of silicone, and the thicknesses are each independently 0.04 mm to 0.06 mm. The silicone adhesive layer is resistant to high temperatures and has high structural strength. A peel force of the prepared composite thermal insulation pad is greater than 10 N/cm. The peel force may be measured in a way that a tension meter is used to pull two sides of the composite thermal insulation pad, with forces perpendicular to the composite thermal insulation pad at 90° acting outward on two sides of the composite thermal insulation pad, the tension meter displays a value of a tension when the composite thermal insulation pad is peeled off, and the peel force is obtained based on this tension.

In some embodiments, the composite thermal insulation pad 10 further includes a third thermal insulation layer (not shown in the figure), and a thermal conduction layer 12 is also disposed between the second thermal insulation layer 112 and the third thermal insulation layer. Further, the composite thermal insulation pad 10 may further include more thermal insulation layers, and the thermal conduction layer 12 may also be disposed between adjacent thermal insulation layers.

Further, material and thickness selection ranges of the third thermal insulation layer and other thermal insulation layers may be the same as those of the first thermal insulation layer 111 and the second thermal insulation layer 112, where the specific materials and specific thicknesses may be the same or different.

In some embodiments, the composite thermal insulation pad 10 further includes a release adhesive layer (not shown in the figure). The release adhesive layer includes a third adhesive layer and a release film, where the third adhesive layer is disposed on the thermal insulation pad body 11. For example, on an outer surface of the first thermal insulation layer 111 and/or the second thermal insulation layer 112, the release film is disposed on an outer surface of the third adhesive layer. In this way, when the composite thermal insulation pad 10 needs to be fixed to a target position, for example, a target battery cell, the release film on the surface of the release adhesive layer of the composite thermal insulation pad 10 is removed, and the composite thermal insulation pad 10 is simply and conveniently fixed to the target position by adhesion of the third adhesive layer, and thus the composite thermal insulation pad 10 is fixed.

In an example, the outer surfaces of the first thermal insulation layer 111 and the second thermal insulation layer 112 of the composite thermal insulation pad 10 are both provided with the above release adhesive layers. During use, the composite thermal insulation pad 10 can be adhered and fixed to two objects respectively through the release adhesive layers on two sides, for example, adhered and fixed to two adjacent battery cells respectively, so that the composite thermal insulation pad 10 is disposed between two adjacent battery cells.

Still referring to FIG. 3, the composite thermal insulation pad 10 may further include a strain detection member 17. The strain detection member 17 is disposed in the thermal insulation pad body 11. Further, the strain detection member 17 is disposed within the thermal insulation pad body 11, or disposed on an outer surface of the thermal insulation pad body 11.

It can be understood that the strain detection member 17 may be disposed within the thermal insulation pad body 11, which includes but is not limited to that the strain detection member 17 is partially or entirely located within the thermal insulation pad body 11. The strain detection member 17 being entirely located within the thermal insulation pad body 11 includes but is not limited to that part of the surface of the strain detection member 17 is flush with the thermal insulation pad body 11, that is, this part of the surface is not covered by the thermal insulation layer and is exposed, and also includes the case where the entire surface of the strain detection member 17 is covered by the thermal insulation pad body 11, that is, the strain detection member 17 is entirely located within the thermal insulation pad body 11.

The strain detection member 17 is a component for detecting stress parameters. Generally, it includes a flexible layer and a strain detection element layer disposed on the flexible layer. The flexible layer can deform synchronously with the thermal insulation layer where it is located, and the strain detection element layer can convert the deformation of the flexible layer into an electrical signal to be outputted, such as a voltage signal. In this way, a pressure parameter of the composite thermal insulation pad 10 can be known based on the electrical signal outputted by the strain detection member 17, that is, the stress of the composite thermal insulation pad 10 is monitored. For example, battery cells in a battery undergo volumetric swelling during use, which causes a change in pressure between adjacent battery cells. Thus, when the composite thermal insulation pad 10 is applied to the battery, a swelling state of the battery during use can be known through the strain detection member 17. In addition, the encapsulation layer of the composite thermal insulation pad 10 also causes a change in pressure between adjacent battery cells before and after it become ineffective, so the strain detection member 17 can also be used to know whether the encapsulation layer has been crushed and becomes ineffective during use of the battery. In this way, the state of the battery during use can be accurately obtained through the strain detection member 17 disposed in the composite thermal insulation pad 10.

Specifically, the strain detection member 17 may be disposed in at least one of the first thermal insulation layer 111 and the second thermal insulation layer 112.

In some examples, by applying a pressure to the composite thermal insulation pad 10 to cause strain thereof, during a process in which the strain changes from 0 to point A, a larger strain indicates a larger stress detected by the strain detection member 17. This is a deformation state of the composite thermal insulation pad 10 before the encapsulation layer becomes ineffective. After point A is reached, pressure is still applied, the strain continues to increase, but the stress detected by the strain detection member 17 decreases to some extent. This is because an excessively large externally applied pressure causes the encapsulation layer to be crushed and become ineffective, resulting in a sudden change in stress and rapid pressure relief, and then, as the strain increases, the stress continues to increase. In this way, a stage in a stress curve where the stress detected by the strain detection member 17 is located can indicate the state of the composite thermal insulation pad 10, and upon the use in a battery, the state of a battery cell adjacent to the composite thermal insulation pad 10 can also be known.

In the specific example shown in FIG. 3, the strain detection member 17 is disposed in the first thermal insulation layer 111, and the strain detection member 17 is entirely located within the first thermal insulation layer 111. It can be understood that the strain detection member 17 may alternatively be disposed in the second thermal insulation layer 112, or the strain detection member 17 may be disposed in both the first thermal insulation layer 111 and the second thermal insulation layer 112.

Further, the strain detection member 17 has a first surface away from the thermal conduction layer 12, the thermal insulation pad body 11 provided with the strain detection member 17 has a second surface away from the thermal conduction layer 12, and a distance between the first surface and the second surface is greater than or equal to 0.3 mm, optionally 0.3 mm to 0.5 mm, and more optionally 0.3 mm to 0.45 mm. The first surface and the second surface are both outer surfaces farther from the phase change material layer 121. In this way, the thermal insulation pad can be used to protect the strain detection member 17, without affecting the sensitivity of the strain detection member 17.

It can be understood that the strain detection member 17 is disposed on a surface of the thermal insulation pad body 11, where the surface may be a surface facing the phase change material layer 121 or a surface facing away the phase change material layer 121.

Optionally, the strain detection member 17 is disposed on the outer surface of the thermal insulation pad body 11, so as to respond more quickly to stress changes. Further, in this case, the composite thermal insulation pad 10 may further include a waterproof protective film (not shown in the figure), the waterproof protective film is disposed on the outer surface of the strain detection member 17 to protect the strain detection member 17 from damage caused by moisture, thereby extending the service life of the strain detection member 17.

Further, the strain detection member 17 further includes an external lead wire 172, the external lead wire 172 is led out from one side of the corresponding thermal insulation layer for connection to a low-voltage connection wire in the battery. Optionally, the external lead wire 172 is led out from a shorter side of the corresponding thermal insulation layer to facilitate wire leading.

It can be understood that generally, the strain detection member 17 further includes two external lead wires 172, and a strain electrical signal obtained by conversion of deformation can be outputted outward through the external lead wires 172.

In some embodiments, a ratio of a thickness of the strain detection member 17 to the thickness of the thermal insulation pad body 11 is 1:(10 to 500).

Further, the thickness of the strain detection member 17 is 10 µm to 50 µm. In an example, the thickness of the strain detection member 17 may be 13 µm. It can be understood that the thickness here refers to a total thickness of the flexible layer and the strain detection element layer.

Referring to FIG. 9, the first thermal insulation layer 111 and the second thermal insulation layer 112 are physically isolated by the thermal conduction layer 12. In other words, the thermal conduction layer 12 is partially surrounded by the thermal insulation pad body 11, edges between the first thermal insulation layer 111 and the second thermal insulation layer 112 are not connected to each other, but the thermal conduction layer 12 is located inside the thermal insulation pad body 11.

Referring to FIG. 10, in some embodiments, the edges of the first thermal insulation layer 111 and the second thermal insulation layer 112 are connected to each other to form an assembly cavity, and the thermal conduction layer 12 is located within the assembly cavity. Through such structural arrangement, the thermal conduction layer 12 is disposed inside the first thermal insulation layer 111 and the second thermal insulation layer 112, reducing the risk of the thermal conduction layer 12 falling off.

Further, an edge of at least one side surface of at least one of the first thermal insulation layer 111 and the second thermal insulation layer 112 forms a protrusion, and the protrusion encloses to form at least part of the assembly cavity. In an example, edges of at least one side surface of the first thermal insulation layer 111 and at least one side surface of the second thermal insulation layer 112 form protrusions, and the protrusions of both are oppositely disposed and enclose to form the assembly cavity. In the specific example shown in FIG. 3, four side edges of one side surface of the first thermal insulation layer 111 and one side surface of the second thermal insulation layer 112 form protrusions, and the protrusions of the first thermal insulation layer 111 and the second thermal insulation layer 112 are oppositely disposed and enclose to form the assembly cavity.

Further, in the specific example shown in FIG. 10, due to the irregular structures of the first thermal insulation layer 111 and the second thermal insulation layer 112, the first encapsulation layer 131 may be used to encapsulate the thermal conduction layer, achieving easier operation. Further, the third encapsulation layer 133 may be used to encapsulate the thermal conduction layer 12 together with the first thermal insulation layer 111 and the second thermal insulation layer 112.

Further, in the specific example shown in FIG. 10, when the thermal conduction layer 12 is disposed inside the first thermal insulation layer 111 and the second thermal insulation layer 112, the first encapsulation edge portion 1311 is folded and located within the assembly cavity.

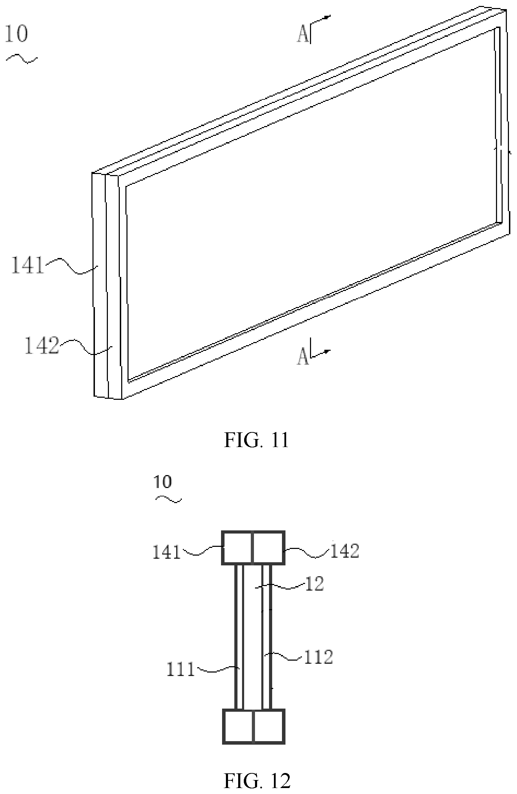

Referring to FIG. 11 and FIG. 12, in some embodiments, the composite thermal insulation pad 10 further includes a first encapsulation frame 141 and a second encapsulation frame 142, where the first encapsulation frame 141 cooperates with the second encapsulation frame 142 to fix the thermal conduction layer 12, the thermal insulation pad body 11, and the encapsulation layer.

Further, the first encapsulation frame 141 is disposed on one side of the first thermal insulation layer 111, the second encapsulation frame 142 is disposed on one side of the second thermal insulation layer 112, and the first encapsulation frame 141 cooperates with the second encapsulation frame 142 to fix the first thermal insulation layer 111, the thermal conduction layer 12, the encapsulation layer, and the second thermal insulation layer 112.

Further, the first encapsulation frame 141 and the second encapsulation frame 142 are each independently a rubber frame or a silicone frame which has good flexibility to absorb a swelling force caused by battery swelling. In other words, the first encapsulation frame 141 and the second encapsulation frame 142 are each independently made of rubber or silicone. Further, the first encapsulation frame 141 and the second encapsulation frame 142 are each independently a square frame, for example, a square silicone frame.

In some specific examples, the encapsulation layer further includes the above first encapsulation layer 131 and second encapsulation layer 132, respectively encapsulating the thermal conduction layer 12, the first thermal insulation layer 111, and the second thermal insulation layer 112. In this case, the way of connecting the first encapsulation frame 141 and the second encapsulation frame 142 achieves a stable structure. Further, the thermal conduction layer 12 may use a liquid or semi-solid phase change material.

Further, the first encapsulation frame 141 has a first limiting groove (not shown in the figure), and the second encapsulation frame 142 has a second limiting groove (not shown in the figure), where the first thermal insulation layer 111, the thermal conduction layer 12, the encapsulation layer, and the second thermal insulation layer 112 are limited within a limiting space formed by the first limiting groove and the second limiting groove. The first limiting groove and the second limiting groove can limit the thermal conduction layer 12, the thermal insulation pad body 11, and the encapsulation layer in a thickness direction and a radial direction of the composite thermal insulation pad 10, thereby improving the structural stability of the composite thermal insulation pad 10.

The radial direction of the composite thermal insulation pad 10 refers to a direction from the center of the composite thermal insulation pad 10 to an edge of the composite thermal insulation pad 10. Further, in this case, the first encapsulation edge portion 1311 of the first encapsulation layer 131 may be located between the first encapsulation frame 141 and the second encapsulation frame 142, and is pressed by side walls of the first encapsulation frame 141 and the second encapsulation frame 142.

It can be understood that when the above first encapsulation frame 141 and second encapsulation frame 142 as well as the first thermal insulation layer 111 and second thermal insulation layer 112 capable of forming an assembly cavity are all provided, the first encapsulation edge portion 1311 of the first encapsulation layer 131 can pass space between the protrusions of the first thermal insulation layer 111 and the second thermal insulation layer 112 and be located between the first encapsulation frame 141 and the second encapsulation frame 142, or the first encapsulation edge portion 1311 of the first encapsulation layer 131 may alternatively be folded and located within the assembly cavity.

Referring to (a) in FIG. 1, in some embodiments, the thermal insulation pad body 11 is provided with a hollow cavity, and a solid phase change material layer is disposed in the hollow cavity. The solid phase change material is disposed in the thermal insulation pad body 11 and does not affect the thermal insulation performance of a thermal insulation substrate under normal conditions, so the second encapsulation layer 132 may not be disposed outside the thermal insulation pad body 11. Further, the encapsulation layer may alternatively include only the above first encapsulation layer 131 to encapsulate and protect the thermal conduction layer 12 therein. Certainly, the encapsulation layer may alternatively include the above first encapsulation layer 131 and second encapsulation layer 132 to respectively encapsulate the thermal conduction layer 12 and the thermal insulation pad body 11. In this case, the way of connecting the first encapsulation frame 141 and the second encapsulation frame 142 achieves a stable structure. Further, the thermal conduction layer 12 may adopt a liquid or semi-solid phase change material.

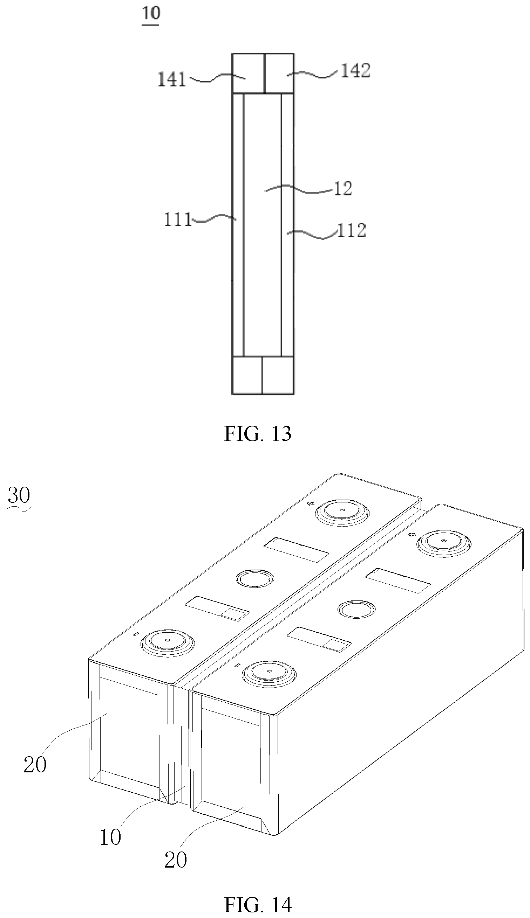

Referring to FIG. 13, in some other embodiments, an outer surface of the first thermal insulation layer 111 is flush with an outer surface of the first encapsulation frame 141, and/or, the outer surface of the second thermal insulation layer 112 is flush with an outer surface of the second encapsulation frame 142. In this way, the thickness of the composite thermal insulation pad 10 can be minimized, reducing space occupation thereof, as well as providing good thermal insulation performance.

In an example, on the basis that the above first adhesive layer 151 and second adhesive layer 152 are included, the above first encapsulation frame 141 and second encapsulation frame 142 may also be further used to fix the phase change material layer 121, the thermal insulation pad body 11, and four sides of the encapsulation layer, thereby improving the structural stability of the composite thermal insulation pad 10. Further, in this case, there is no need to fix the encapsulation frame in the thickness direction, so that the outer surface of the first thermal insulation layer 111 may be flush with the outer surface of the first encapsulation frame 141, and the outer surface of the second thermal insulation layer 112 may be flush with the outer surface of the second encapsulation frame 142.

It can be understood that in some embodiments, the first thermal insulation layer 111, the thermal conduction layer 12, the second thermal insulation layer 112, and the third thermal insulation layer may be connected using the above adhesive layer rather than using the above encapsulation frame, or using the above encapsulation frame rather than using the above adhesive layer, or using both the above adhesive layer and encapsulation frame, or using neither. For example, the first thermal insulation layer 111 is directly formed on a surface of the thermal conduction layer 12 by coating.

Further, the above first thermal insulation layer 111, second thermal insulation layer 112, and third thermal insulation layer each independently include at least one of a thermal insulation felt and a thermal insulation coating.

More further, when any of the above thermal insulation layers includes both a thermal insulation felt and a thermal insulation coating, the thermal insulation coating is optionally disposed on a side closer to the thermal conduction layer 12, specifically, the thermal insulation coating is disposed on a surface of the first encapsulation layer 131 of the thermal conduction layer 12, and the thermal insulation felt is disposed on a side farther from the thermal conduction layer 12. In other words, the thermal insulation coating is directly formed on the surface of the first encapsulation layer 131, and the thermal insulation coating is located between the first encapsulation layer 131 and the thermal insulation felt.

For example, in the example shown in FIG. 3, the above first thermal insulation layer 111 and second thermal insulation layer 112 are thermal insulation felts, and the third thermal insulation layer is also a thermal insulation felt. In other examples, the above first thermal insulation layer 111 and second thermal insulation layer 112 may alternatively be thermal insulation coatings. In contrast, a thickness of the thermal insulation coating is smaller, so that an overall thickness of the prepared composite thermal insulation pad is smaller, requiring smaller space. A thermal insulation layer of the composite thermal insulation pad 10 optionally adopts a thermal insulation coating, or a composite of a thermal insulation coating and a ceramic felt, thereby achieving both small occupied space and good thermal insulation performance.

Taking FIG. 3 as an example, when the strain detection member 17 is disposed in the second thermal insulation layer 112, the first thermal insulation layer 111 may be first provided with a groove for accommodating the strain detection member 17, and after the strain detection member 17 is placed in the groove, the groove is filled with the thermal insulation felt to cover the strain detection member 17. Specifically, the strain detection member 17 is fixed to the thermal insulation felt through an adhesive layer.

For example, in the example shown in FIG. 10, the above first thermal insulation layer 111 and second thermal insulation layer 112 are thermal insulation felts, and the assembly cavity thereon may be integrally formed during formation of the thermal insulation felt, or may be formed by grooving after the thermal insulation felt is formed.

It can be understood that the thermal insulation felt can be connected to the thermal conduction layer 12 through the above adhesive layer or encapsulation frame. The thermal insulation coating may be directly formed on the first encapsulation layer 131 of the thermal conduction layer 12. In an example, the thermal insulation coating may be prepared in the following manner: a slurry is applied onto the first encapsulation layer 131 of the thermal conduction layer 12, followed by drying to form a coating.

More further, the thermal insulation felt may be a ceramic thermal insulation felt. Still more further, the thermal insulation coating may be a ceramic thermal insulation coating. It can be understood that the ceramic thermal insulation felt and the ceramic thermal insulation coating are both ceramic material layers. In some embodiments, the thermal insulation pad body 11 is a ceramic material layer. In other words, the above first thermal insulation layer 111, second thermal insulation layer 112, and third thermal insulation layer are each independently a ceramic material layer.

The material in the "ceramic material layer" in this application includes but is not limited to at least one of ceramic oxide, ceramic nitride, and ceramic carbide, where the ceramic oxide includes but is not limited to at least one of silica and alumina, the ceramic nitride includes but is not limited to silicon nitride, and the ceramic carbide includes but is not limited to silicon carbide.

In some examples, the ceramic material layer may be one or a stack of more of a silica layer, an alumina layer, a silicon nitride layer, and a silicon carbide layer.

Further, the ceramic thermal insulation felt may be a silica aerogel ceramic felt. In an example, the silica aerogel ceramic felt may be prepared in the following manner: an aerogel material is prepared using an inorganic fiber reinforcement technology, followed by immersion of sol, gelling, solvent replacement, and a supercritical drying process.

In some embodiments, the first thermal insulation layer 111, the second thermal insulation layer 112, and the third thermal insulation layer each independently meet the following conditions: thermal conductivity at 25°C ≤ 0.020 W/m·K, thermal conductivity at 200°C ≤ 0.027 W/m·K, thermal conductivity at 300°C ≤ 0.035 W/m·K, and thermal conductivity at 500°C ≤ 0.080 W/m·K.

In some embodiments, densities of the first thermal insulation layer 111, the second thermal insulation layer 112, and the third thermal insulation layer are each independently 0.2 g/cm³ to 0.22 g/cm³. Further, a thickness of the first thermal insulation layer 111 is 0.5 mm to 8 mm. In an example, it may be 0.5 mm, 1 mm, 2 mm, 3 mm, 4 mm, 5 mm, 6 mm, 7 mm, or 8 mm, optionally 1 mm to 8 mm.

Further, a thickness of the second thermal insulation layer 112 is 0.5 mm to 8 mm. In an example, it may be 0.5 mm, 1 mm, 2 mm, 3 mm, 4 mm, 5 mm, 6 mm, 7 mm, or 8 mm, optionally 1 mm to 8 mm.

Herein, various thicknesses in the composite thermal insulation pad may be detected according to the following method. A device s used is: a Mitutoyo 547-301 thickness gauge, with device accuracy: ≤ 0.01 mm. During detection, detection surfaces of the composite thermal insulation pad and the Mitutoyo 547-301 thickness gauge are both required to be parallel to the ground, a total of five places including four corners and a central region are taken as detection positions, and an average value of the five places is taken as a detected value, for example, a thickness of the thermal insulation layer on the outer side.

In some embodiments, in addition to the phase change material, the phase change material layer 121 may further include a thermal insulation substrate, and the phase change material fills into the thermal insulation substrate. In other words, the pores of the thermal insulation substrate are filled with the phase change material.

The thermal insulation substrate may be a ceramic substrate, for example, a ceramic fiber felt.

Further, in some examples, at least part of the phase change material directly fills into the pores of the thermal insulation substrate. In some other examples, the phase change material may alternatively fill into the pores of the thermal insulation substrate in the form of phase change microcapsules. It can be understood that in a same thermal insulation substrate, phase change materials in two states may alternatively be both included, where one is that the phase change material directly fills into the pores of the thermal insulation substrate, and the other is that the phase change material fills into the pores of the thermal insulation substrate in the form of phase change microcapsules.

It can be understood that the phase change material layer 121 may be obtained by immersing a thermal insulation substrate with pores such as a ceramic fiber felt in a liquid phase change material, for example, immersing the thermal insulation substrate in a molten phase change material and then performing cooling, or immersing the thermal insulation substrate in a phase change material solution and then performing drying or heat preservation treatment. In addition to absorbing heat, the phase change material layer 121 may also play a role of thermal insulation. When the phase change material vaporizes and ruptures the first encapsulation layer 131, that is, when the composite thermal insulation pad 10 becomes ineffective, the thermal insulation substrate in the phase change material layer 121 can still play a role of thermal insulation. In other words, the phase change material directly fills into the pores of the thermal insulation substrate.

In some other embodiments, at least part of the phase change material fills into the pores of the thermal insulation substrate in the form of phase change microcapsules. In other words, the pores of the thermal insulation substrate of the phase change material layer 121 may be filled with phase change microcapsules. The phase change microcapsule includes a core material and a wall material, where the wall material wraps an outer surface of the core material, and the core material includes the phase change material. It can be understood that in some examples, the pores of the thermal insulation substrate may alternatively be directly filled with both the phase change material and the above phase change microcapsules.

The above phase change material layer 121 may be prepared by dispersing the phase change microcapsules in a solvent to obtain a phase change microcapsule dispersion, then immersing the thermal insulation substrate in the phase change microcapsule dispersion to fill the phase change microcapsules into the pores of the thermal insulation substrate, and then removing the solvent in the phase change microcapsule dispersion.

In this way, the phase change microcapsules in the phase change material layer 121 play a role of absorbing heat. When a battery cell undergoes thermal runaway, the phase change material in an adjacent composite thermal insulation pad 10 vaporizes and ruptures the first encapsulation layer 131, that is, the composite thermal insulation pad 10 becomes ineffective, and at this moment, the thermal insulation substrate in the phase change material layer 121 can still play a role of thermal insulation.

Further, the wall material includes a polymer matrix and ceramic particles filling into the polymer matrix. Further, a mass ratio of the polymer matrix to the ceramic particles is 3:(7 to 11). In an example, the mass ratio of the polymer matrix to the ceramic particles may be 3:7, 3:8, 3:9, 3:10, or 3:11. By controlling the ceramic particles in the wall material to have a large mass percentage, the pressure resistance and thermal insulation capability of the wall material can be improved.

Further, a mass ratio of the polymer matrix to the core material is 1:(1.3 to 1.6). In an example, the mass ratio of the polymer matrix to the core material may be 1:1.3, 1:1.4, 1:1.5, or 1:1.6. In this way, the pressure resistance of the phase change microcapsules can be further improved.

Further, the polymer matrix includes but is not limited to any one of phenolic resin, polyacrylonitrile resin, and melamine formaldehyde resin. The polymer matrix not only has good insulation properties, but also has good compatibility with phase change materials such as paraffin, and can form a stable interface with the phase change material, improving the thermal stability of the phase change microcapsules.

Further, a particle size Dᵥ50 of the phase change microcapsules is 5 µm to 8 µm. The particle size Dᵥ50, that is, the volume-based mean particle size Dᵥ50, represents a corresponding particle size of the particles at which the cumulative volume distribution percentage reaches 50%, which may be tested using methods known in the art. For example, a laser particle size analyzer (such as Malvern Master Size 3000) is used for measurement.

Further, a thermal conductivity of the wall material at 25°C is greater than or equal to 0.32 W/m·K. Thus, the wall material has a good thermal conductivity and can better conduct heat to the phase change material therein.

Further, a melting point of the wall material is higher than 98°C. The melting point of the wall material is high, which can maintain the structural stability of the microcapsules within a phase change temperature range of the phase change material.

In this application, material selections of the above thermal insulation substrate and ceramic particles are the same as selection ranges of the above ceramic material layer. In some examples, the above thermal insulation substrate is a ceramic fiber mat. The ceramic fiber mat has ceramic fiber as a core skeleton, which can not only well immerse the liquid phase change material and fill the phase change material in the pores of the core skeleton of the ceramic fiber mat, but also has low thermal conductivity, good high temperature resistance (1280°C), good instantaneous thermal shock resistance, flame retardant performance, and mechanical properties, causes no pulverization, has flexibility and resilience, and is compatible with battery pack manufacturing processes.

In some examples, the thermal insulation substrate includes nano ceramic fiber. The nano ceramic fiber includes at least one of silica fiber, alumina fiber, zirconia fiber, silica-alumina ceramic fiber, borosilicate ceramic fiber, boroalumina ceramic fiber, and zirconia-alumina-silica ceramic fiber.

Further, an average diameter of the nano ceramic fiber is 200 nm to 800 nm, and a thickness of the thermal insulation substrate is 1 mm to 2 mm.

In some examples, the ceramic particles include but are not limited to at least one of boron nitride particles, silicon nitride particles, silicon carbide particles, and silica particles. Further, Dᵥ50 of the ceramic particles is 60 nm to 90 nm. In an example, the Dᵥ50 of the ceramic particles may be any value of 60 nm, 65 nm, 70 nm, 75 nm, 80 nm, 83 nm, 85 nm, and 90 nm or a value between any two of these values. Silica particles with the above specific particle size facilitates doping and uniform dispersion in the substrate.

The phase change microcapsules may be obtained by coating the core material with the wall material using an in-situ polymerization method. In some examples, a preparation method of the phase change microcapsule includes the following steps: dispersing ceramic particles in water to form an aqueous phase; heating the phase change material to a molten state to form an oil phase; mixing the aqueous phase and the oil phase, followed by stirring to form a Pickering emulsion (Pickering emulsion); and adding raw materials required for preparing the polymer matrix of the wall material (for example, a water-soluble polymer monomer or prepolymer aqueous solution) to the Pickering emulsion, followed by stirring and polymerization at room temperature, to generate a water-insoluble polycondensate with a cross-linked three-dimensional network structure (that is, the polymer matrix) at an emulsion interface.

The polymer matrix made of the above material has better compatibility with phase change materials such as paraffin, and also facilitates uniform dispersion of all ceramic particles, ensuring the stability of the phase change microcapsules. Still referring to FIG. 4, the first encapsulation layer 131 is disposed on the thermal conduction layer 12 to form an encapsulated thermal conduction layer, and the thermal conduction layer 12 includes a phase change material layer 121. Further, the phase change material layer 121 includes the above thermal insulation substrate 1211 and the phase change material filling into the pores of the thermal insulation substrate 1211. Further, there is a spacing from at least one side edge 1211a of the thermal insulation substrate 1211 located in the encapsulation cavity formed by the first encapsulation layer 131 to an inner wall 131a of the encapsulation cavity, and the weak portion 1312 is disposed on the first encapsulation layer 131 and located between the edge 1211a of the thermal insulation substrate 1211 and the inner wall 131a of the encapsulation cavity.

In some embodiments, the phase change material layer 121 includes the above thermal insulation substrate 1211 and the phase change material filling into the pores of the thermal insulation substrate 1211; and a strain of the encapsulated thermal conduction layer under a stress of 0.5 MPa to 5 MPa is 8% to 20%. Further, a strain of the encapsulated thermal conduction layer under a stress of 0.5 MPa to 4 MPa is 8% to 20%, further about 9% to 15.5%. The encapsulated thermal conduction layer has certain compressibility and can absorb battery swelling when the battery swells, thereby further improving the service life and thermal insulation performance of the thermal insulation pad. In some embodiments, in addition to the phase change material, the phase change material layer 121 may further include at least one of an infrared shielding agent, a flame retardant, and a thermal conduction agent, which may also further fills into the pores of the thermal insulation substrate. The infrared shielding agent includes at least one of titanium dioxide, silica, and carbon powder; the flame retardant includes one or more of ammonium dihydrogen phosphate, tris(2,3-dibromopropyl) phosphate, thiophosphoric acid triisocyanate, urea, ammonium pentaborate, ammonium bicarbonate, or melamine cyanurate; and a thermal conductivity of the thermal conduction agent is greater than 20 W/(mK).

Further, the thermal conduction agent may include at least one of copper, silver, carbon black, graphene, aluminum nitride, boron nitride, silicon nitride, and magnesium oxide. The above phase change material layer 121 may be obtained by mixing the phase change material with at least one of the infrared shielding agent, the flame retardant, and the thermal conduction agent to form a mixture solution, then immersing the thermal insulation substrate in the mixture solution, and then performing drying or heat preservation treatment.

It can be understood that since the first encapsulation layer 131 is disposed on the outer surface of the phase change material layer 121 and constitutes an encapsulation cavity, the first encapsulation layer 131 includes a first region attached to the first thermal insulation layer 111, a second region attached to the second thermal insulation layer 112, and a third region connecting the first region and the second region. The weak portion 1312 is disposed on the first region and/or second region of the first encapsulation layer 131, and located between the edge 1211a of the thermal insulation substrate 1211 and the inner wall 131a of the encapsulation cavity, that is, located on a region of the first encapsulation layer 131 that constitutes the above spacing. The inner wall 132a of the encapsulation cavity here refers to an inner wall of the encapsulation cavity directly facing the side edge 1211a of the thermal insulation substrate 1211, that is, a third region directly facing the side edge 1211a of the thermal insulation substrate 1211.

Further, two opposite surfaces of the thermal insulation substrate 1211 are attached to opposite inner walls of the first encapsulation layer 131, that is: the two opposite surfaces of the thermal insulation substrate 1211 are respectively attached to the first region and the second region of the encapsulation layer. The side edge of the thermal insulation substrate 1211 is an edge connecting the two opposite surfaces of the thermal insulation substrate 1211. The thermal insulation substrate 1211 is square, and there is a spacing between each of the side edge of four sides of the thermal insulation substrate 1211 and each of inner walls of four sides of the encapsulation cavity. In other words, the spacing surrounds the four side edges of the thermal insulation substrate 1211. The preservation of the spacing can, on one hand, prevent excessive stress between the four side edges of the thermal insulation substrate 1211 and the encapsulation layer from causing damage to the encapsulation layer, and on the other hand, reserve a specific volume change space for the phase change material therein.

Further, a distance h1 between the weak portion 1312 and the edge 1211a of the thermal insulation substrate 1211 is controlled to be 2 mm to 7 mm, optionally 2 mm to 5 mm, and more optionally 4 mm to 5 mm. When other conditions are unchanged, a magnitude of a bulge rupture force is related to the distance between the weak portion and this edge of the thermal insulation substrate 1211.

Further, a distance h2 between the weak portion 1312 and the inner wall 131a of the encapsulation cavity is 3 mm or greater, optionally 3 mm to 5 mm, to prevent the weak portion 1312 from being too close to the edge of the encapsulation layer and affecting the encapsulation strength of the encapsulation layer. Optionally, to enable the first encapsulation layer 131 to achieve quicker timely bulge rupture during thermal runaway so as to discharge gas, the distance h1 between the weak portion 1312 and the edge 1211a of the thermal insulation substrate 1211 is controlled to be 4 mm to 5 mm.

Further, the weak portion 1312 is linear. Further, an extension direction of the weak portion 1312 is the same as an extension direction of the edge 1211a of the thermal insulation substrate 1211. It can be understood that in other examples, the weak portion 1312 may alternatively be arc-shaped or the like, without being limited thereto.

Further, a total length of the weak portion 1312 accounts for 50% to 100% of a length of this edge of the thermal insulation substrate 1211, optionally 50% to 80%. For example, the length proportion may be 50%, 60%, 70%, 80%, 90%, or 100%. The total length proportion of the weak portion 1312 is controlled to enable timely bulge rupture during thermal runaway.

Further, there are a plurality of weak portions 1312, and the plurality of weak portions 1312 are spaced apart along the extension direction of the edge 1211a of the thermal insulation substrate 1211. The length of each weak portion 1312 is 1/20 to 1/10 of the edge 1211a of the thermal insulation substrate 1211, for example, 1/20, 1/15, or 1/10.

In a specific example, the weak portion 1312 is a scored region. The length of the weak portion 1312 is 5 mm to 20 mm, and a width of the weak portion 1312 is 0.5 mm to 2 mm.

It can be understood that the technical solutions of the plurality of embodiments described above can be combined for use without contradicting each other.

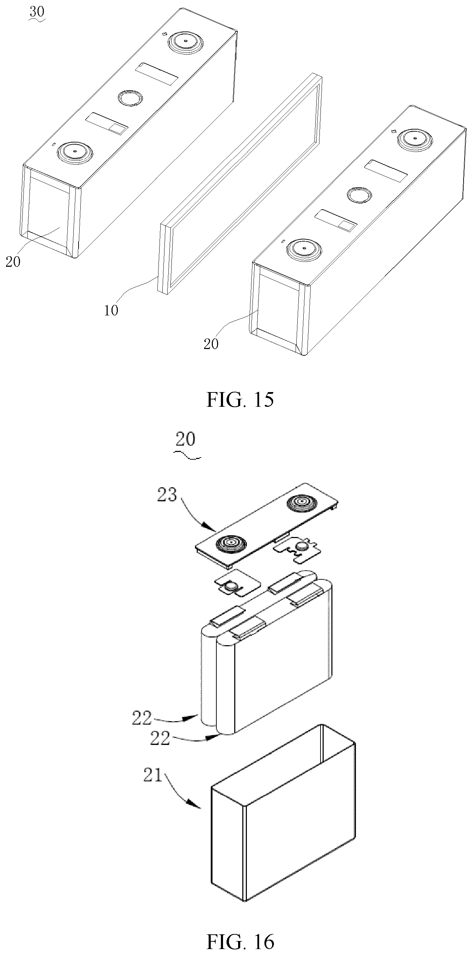

Referring to FIG. 14 and FIG. 15, another embodiment of this application further provides a battery 30, which includes any of the above composite thermal insulation pads 10.

Further, the battery 30 further includes a plurality of battery cells 20, and the composite thermal insulation pad 10 is disposed between at least two adjacent battery cells 20. Optionally, a composite thermal insulation pad 10 is disposed between any two adjacent battery cells 20.

It can be understood that the above composite thermal insulation pad 10 may also be disposed between the battery cell 20 and an inner wall of a shell of the battery 30.

In some embodiments, the above battery 30 further includes a third adhesive layer, where one side of the third adhesive layer is disposed on an outer surface of the thermal insulation pad body 11 (the first thermal insulation layer 111 and/or the second thermal insulation layer 112) of the composite thermal insulation pad 10, and the other side is used to adhere the composite thermal insulation pad 10 to a designated position of the battery 30. For example, the other side is adhered to a surface (for example, a larger surface) of the battery cell 20.

The battery 30 is provided with the above composite thermal insulation pad 1, with an operating principle as follows. In a first stage, after thermal runaway occurs in a battery cell 20 in the battery 30, heat is transferred to an adjacent (for example, a neighboring) composite thermal insulation pad 10. The thermal conduction layer 12 in the composite thermal insulation pad 10 absorbs and conducts the heat, the phase change material layer 121 in the thermal conduction layer 12 absorbs the heat, and the intermediate layer 122 in the thermal conduction layer 12 rapidly conducts heat, triggering a larger area of heat absorption in the phase change material layer 121, thereby achieving the effect of retarding thermal runaway of the battery. In a second stage, the phase change material layer 121 absorbs heat until a phase change occurs, so that a large amount of heat is absorbed. In a third stage, the first encapsulation layer 131 and the phase change material layer 121 become ineffective: the phase change material in the phase change material layer 121 converts into a gaseous state and ruptures the first encapsulation layer 131, to discharge high-temperature gas. In a fourth stage, the first thermal insulation layer 111, the second thermal insulation layer 112, and the thermal insulation substrate in the phase change material layer 121 continue to play a role of thermal insulation.

The first stage and the second stage are states before the composite thermal insulation pad 10 becomes ineffective, and the third stage and the fourth stage are states after the composite thermal insulation pad 10 becomes ineffective.

It can be understood that the shape of the battery cell 20 includes but is not limited to a square shape and a cylindrical shape. The composite thermal insulation pad 10 may be attached and disposed according to the shape of the battery cell 20.

In some embodiments, the battery cell 20 is square, and the composite thermal insulation pad 10 is disposed on a larger side surface of the battery cell 20 to increase a contact area of the composite thermal insulation pad 10 and improve the thermal insulation performance.

Further, the composite thermal insulation pad 10 is disposed between major surfaces of two adjacent battery cells 20.

In this application, unless otherwise stated, the "battery cell 20" refers to a basic unit capable of realizing mutual conversion between chemical energy and electrical energy. Further, generally, it at least includes a positive electrode sheet, a negative electrode sheet, and an electrolyte. During charging and discharging of a battery, active ions are intercalated and deintercalated back and forth between the positive electrode sheet and the negative electrode sheet. The electrolyte plays a role in conducting active ions between the positive electrode sheet and the negative electrode sheet.

It can be understood that after a plurality of battery cells 20 are connected to each other and arranged in a specific order, they can be directly accommodated in a box so as to be assembled into the battery. Alternatively, a plurality of battery cells 20 are assembled into a battery module, then a plurality of battery modules are connected to each other to form an entirety, and ultimately the entirety formed by the battery modules is accommodated in the box to form the battery.

For example, FIG. 16 is a battery cell 20 of a square structure as an example. The battery cell 20 includes a shell 21, a cover plate 23, and an electrode assembly 22. The electrode assembly 22 is accommodated in the shell 21, and the cover plate 23 is hermetically disposed at an opening. The electrode assembly 22 includes a positive electrode sheet, a negative electrode sheet, and a separator. The positive electrode sheet, the negative electrode sheet, and the separator may be formed by a winding process or a stacking process. Further, the electrode assembly 22 further includes an electrolyte, such as an electrolyte solution. The electrolyte solution infiltrates the electrode assembly 22. There may be one or more electrode assemblies 22 in the battery cell 20, which can be selected by those skilled in the art according to specific actual needs.

Further, one or two ends of the shell 21 are provided with openings.

Further, the shell 21 is a rectangular shell, and an opening direction of the shell 21 is a height direction of the shell 21. Further, the two ends of the shell 21 are provided with openings, and the two openings are oppositely disposed along the height direction of the shell 21. Further, in a non-limiting example, a height of the shell 21 is 80 mm to 210 mm. Further, in a non-limiting example, a length of the shell 21 is 90 mm to 240 mm. Further, in a non-limiting example, a width of the shell 21 is 20 mm to 80 mm.

Further, the battery cell 20 and the shell 21 are rectangular shells, and the composite thermal insulation pad 10 is disposed on a larger side surface of the battery cell 20. The larger side surface is perpendicular to the above width direction, that is, a side surface formed by two sides in the above length direction and height direction.

Further, in a non-limiting example, a wall thickness of the shell is 0.5 mm to 0.8 mm.

Further, the shell is an aluminum alloy shell, for example, a 3-series aluminum alloy shell or a 5-series aluminum alloy shell.

Further, aluminum alloy of the 3-series aluminum alloy shell includes the following components by mass percentage: Al ≥ 99.6%, Cu ≤ 0.05%, Fe ≤ 0.35%, Mg ≤ 0.03%, Mn ≤ 0.03%, Si ≤ 0.25%, Ti ≤ 0.03%, V ≤ 0.05%, Zn ≤ 0.05%, and other individual element ≤ 0.03%.

Further, aluminum alloy of the 5-series aluminum alloy shell includes the following components by mass percentage: Al ≥ 96.7%, 0.05% ≤ Cu ≤ 0.2%, Fe ≤ 0.7%, Mn ≤ 1.5%, Si ≤ 0.6%, Zn ≤ 0.1%, other individual element component ≤ 0.05%, and total of other element components ≤ 0.15%.

Another embodiment of this application further provides an electric apparatus, including the above battery provided by this application. The above battery can be used as a power source for the electric apparatus or as an energy storage unit for the electric apparatus. The electric apparatus may include mobile devices, electric vehicles, electric trains, ships, satellites, energy storage systems, and the like, but is not limited thereto. Mobile devices may be, for example, mobile phones or laptops. Electric vehicles may be, for example, battery electric vehicles, hybrid electric vehicles, plug-in hybrid electric vehicles, electric bicycles, electric scooters, electric golf carts, or electric trucks, but are not limited thereto.

For an electric apparatus, a secondary battery, a battery module or a battery pack may be selected according to the usage requirements of the electric apparatus.

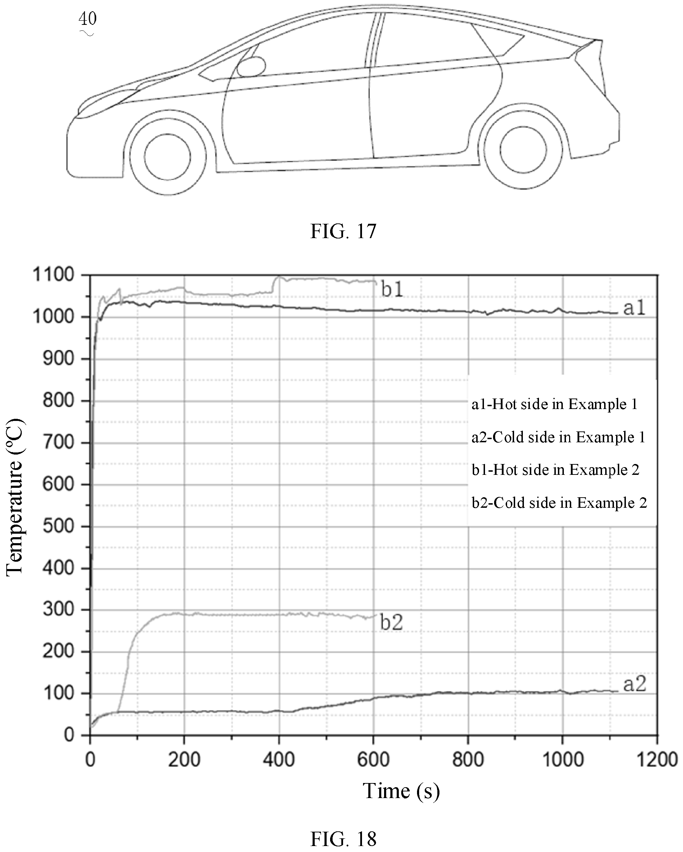

FIG. 17 shows an electric apparatus 40 as an example. The electric apparatus 40 is a battery electric vehicle, a hybrid electric vehicle, a plug-in hybrid electric vehicle, or the like. To meet the high power and high energy density requirements of the electric apparatus for secondary batteries, a battery pack or a battery module may be used.

In another example, the apparatus may be a mobile phone, a tablet computer, a laptop computer, or the like. Such apparatus is usually required to be light and thin, and can use a secondary battery as a power source.

The following describes examples of this application. The examples described below are exemplary and are only used to explain this application, and cannot be understood as limitations on this application. Specific techniques or conditions that are not indicated in the examples are the same as techniques or conditions described in the literature in the field or the product instructions. The reagents or instruments used without indicating the manufacturer are all conventional products that are commercially available.

The following are preparation examples.

### Example 1

The composite thermal insulation pad 10 of Example 1, as shown in FIG. 9, included a first thermal insulation layer 111, a first adhesive layer 151, a thermal conduction layer 12, a second adhesive layer 152, and a second thermal insulation layer 112 stacked in sequence. The thermal conduction layer 12 included two phase change material layers 121 and an intermediate layer 122 disposed between the two phase change material layers 121. The intermediate layer 122 was a copper metal layer with a thickness of 0.03 mm.

The first encapsulation layer 131 was disposed on an outer surface of the thermal conduction layer 12 to constitute an encapsulated thermal conduction layer.

The first thermal insulation layer 111 and the second thermal insulation layer 112 were both silica aerogel ceramic felts, each of which had a thickness of 1.5 mm.

The first adhesive layer 151 and the second adhesive layer 152 both had a thickness of 0.05 mm and were both adhesive layers made of silicone.

In the encapsulated thermal conduction layer, the phase change material layer 121 included a thermal insulation substrate and a phase change material filling into the pores of the thermal insulation substrate. A specific composition of the phase change material was paraffin, specifically C₂₈H₅₈, C₃₈H₇₈, and C₅₇H₁₁₆ at a mass ratio of 23:34:60. In the phase change material layer 121, a total mass percentage of the phase change material was 60%. The thermal insulation substrate was a silica ceramic fiber felt. The first encapsulation layer 131 was an aluminum-plastic film, where a total thickness of two sides was 0.3 mm. The two phase change material layers 121 had the same thickness, and a total thickness of the two phase change material layers 121 and the thermal conduction layer 12 was 3 mm.

### Example 2

The structure and materials in Example 2 were basically the same as those in Example 1, except that the structure of the thermal conduction layer 12 was different. Specifically, there was no intermediate layer 122, to be specific, there was no copper metal layer. The thermal conduction layer 12 was a phase change material layer with a total thickness of 3 mm.

The following is a performance test.

The composite thermal insulation pads prepared in the examples were subjected to thermal insulation performance tests.

The test method was as follows: One side of the composite thermal insulation pad was burned with butane flame and the other side was not treated, for 1200 s. Temperature sensing wires were installed on two opposite sides of the composite thermal insulation pad (specification: a rectangle of 100 mm × 100 mm), to measure real-time temperatures of the two sides of the composite thermal insulation pad within 1200 s, so as to obtain temperature change curves of the two sides of the composite thermal insulation pad, from which the thermal insulation effect of the composite thermal insulation pad could be judged.

The side of the composite thermal insulation pad in direct contact with the butane flame was a hot side, and the other side opposite the hot side was a cold side. There were three temperature sampling points on the hot side and the cold side, one was a center point, and the other two were symmetrically distributed with respect to the center point, with a spacing of 15 mm from the center point. An average value of the three sampling points was taken as the real-time temperature values of the hot side and the cold side.

The test results of Example 1 and Example 2 are shown in FIG. 18. The temperature change curves of the hot side and cold side of Example 1 are a1 and a2 respectively. The temperature change curves of the hot side and cold side of Example 2 are b1 and b2 respectively.

From FIG. 18, it can be seen that within the test time of 1200 s, when the temperature of the hot side reaches nearly 1000°C to 1100°C, due to the thermal insulation effect of the composite thermal insulation pad, the maximum temperature of the cold side in Example 1 is about 100°C, and the maximum temperature of the cold side in Example 2 does not exceed 300°C. Especially within the first 60 s, although the temperature of the hot side rises, the cold side has a low temperature plateau (about 50°C). As the test time increases and further heat diffusion occurs, the temperature of the cold side rises and is basically maintained at a temperature plateau around 290°C. A phase change plateau time is as shown in Table 1. Note: The mass in Table 1 refers to a total mass of the composite thermal insulation pad.

**Table 1**

| Tested sample | Mass (g) | Maximum temperature of hot side (°C) | Maximum temperature of cold side (°C) | Temperature different (°C) | Phase change plateau time (s) |
|---|---|---|---|---|---|
| Example 1 | 85.76 | 1016 | 115 | 901 | 420 |
| Example 2 | 83.21 | 1078 | 289 | 789 | 65 |

### Example 3

Example 3 was basically the same as Example 1, except that the composition of the phase change material layer in the encapsulated thermal conduction layer was different. Specifically, the phase change material layer 131 included a thermal insulation substrate and a phase change material filling into the pores of the thermal insulation substrate. The thermal insulation substrate was also a silica nano ceramic fiber felt. The main difference was that the phase change material was replaced with silica sol with an equal mass.

### Example 4

Example 4 was basically the same as Example 1, except that the composition of the phase change material in the encapsulated thermal conduction layer was different. Specifically, the phase change material layer 131 included a thermal insulation substrate and a phase change material filling into the pores of the thermal insulation substrate. The thermal insulation substrate was also a silica nano ceramic fiber felt. The main difference was that the phase change material was replaced with crystalline hydrated salt (sodium carbonate decahydrate) and aluminum hydroxide sol with an equal mass. In addition, the phase change material layer 131 further included an infrared shielding agent filling into the pores of the thermal insulation substrate. The infrared shielding agent included titanium dioxide and silica.

The following is a compressibility test.

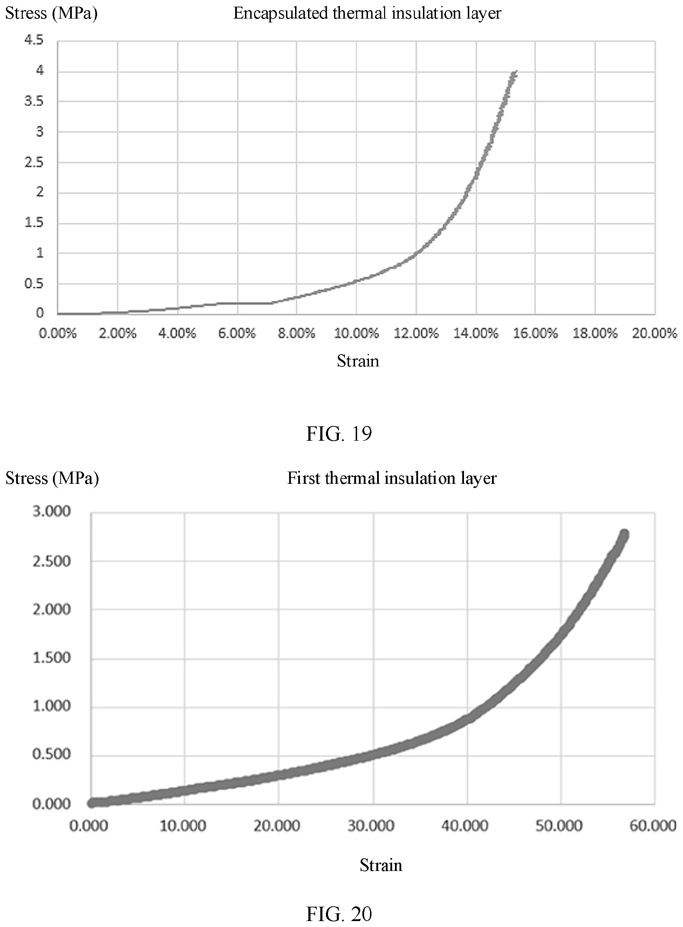

An individual encapsulated thermal conduction layer in Example 1 was used as a sample (with a sample area of 100 mm*100 mm) for performing a stress-strain test, to obtain a compressive stress-strain curve graph, as shown in FIG. 19. It can be seen that an average strain of the sample under a stress of 0.5 MPa to 5 MPa, further 0.5 MPa to 4 MPa, is within a range of 8% to 20%, further within a range about 9% to 15.5%. A rupture pressure upon encapsulation failure of the encapsulated thermal conduction layer is slightly greater than 4 MPa.

An individual first thermal insulation layer (a silica aerogel ceramic felt) in Example 1 was used as a sample (with a sample area of 100 mm*100 mm and a thickness of 1 mm) to perform a stress-strain test, to obtain a compressive stress-strain curve graph, as shown in FIG. 20. It can be seen that a strain of the sample under a stress of 0.5 MPa to 5 MPa is 25% to 70%. Further, a strain of the sample under a stress of 0.5 MPa to 3 MPa is 25% to 70%. More further, a strain of the sample under a stress of 0.5 MPa to 2.8 MPa is 29% to 57%.

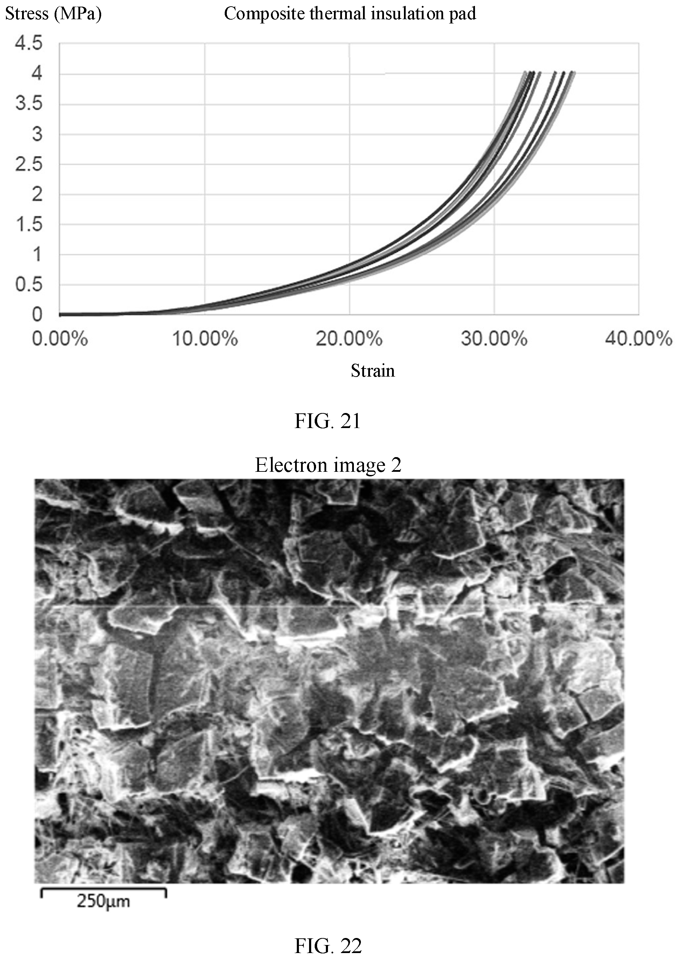

The entire composite thermal insulation pad in Example 1 was used as a sample (with a sample area of 100 mm*100 mm), where a plurality of groups of parallel samples were used for performing a stress-strain test, to obtain a stress-strain curve, as shown in FIG. 21. It can be seen that a strain of the entire composite thermal insulation pad under a stress of 0.5 MPa to 4 MPa is 15% to 35%.

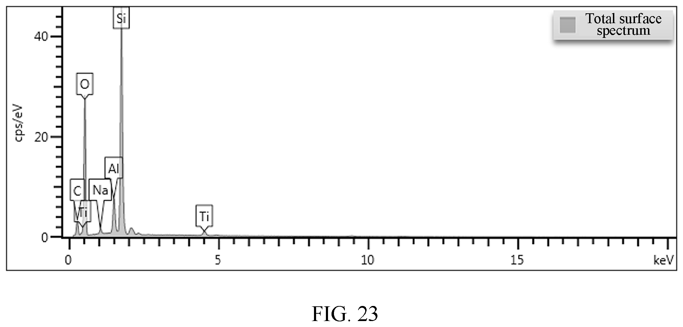

The following is a component test of the phase change material layer in the encapsulated thermal conduction layer of the composite thermal insulation pad of Example 4. Specifically, scanning electron microscopy and energy dispersive spectroscopy analysis (SEM&EDS) were used to obtain SEM images and EDS images, as shown in FIG. 22 and FIG. 23 respectively. The atomic percentages of the elements are shown in Table 2.

**Table 2**

| Element | Line type | Wt% | Atomic percentage | Standard sample label |
|---|---|---|---|---|
| C | K-line series | 23.14 | 31.48 | C Vit |
| O | K-line series | 54.29 | 55.45 | SiO₂ |
| Na | K-line series | 0.68 | 0.48 | Al bite |
| Al | K-line series | 2.90 | 1.76 | Al₂O₃ |
| Si | K-line series | 18.09 | 10.53 | SiO₂ |
| Ti | K-line series | 0.89 | 0.30 | Ti |
| Total | / | 100.00 | 100.00 | / |

The technical features of the above embodiments can be combined arbitrarily. For brevity of the description, not all possible combinations of the technical features in the above embodiments are described. However, as long as there is no contradiction in the combinations of these technical features, these combinations should be considered to be within the scope recorded in this specification.

The above embodiments only express several implementations of this application. Although the descriptions are relatively specific and detailed, they cannot be understood as limiting the patent scope of this application. It should be pointed out that for those of ordinary skill in the art, several modifications and improvements can be made without departing from the concept of this application, which all fall within the protection scope of this application. Therefore, the protection scope of the patent of this application should be subject to the appended claims.

## Claims

1. A composite thermal insulation pad, comprising:
a thermal insulation pad body; and
a thermal conduction layer disposed within the thermal insulation pad body.

2. The composite thermal insulation pad according to claim 1, wherein the thermal conduction layer comprises one or a stack of at least two of a phase change material layer, a metal layer, and a graphene film layer.

3. The composite thermal insulation pad according to claim 2, wherein the thermal conduction layer comprises at least two phase change material layers disposed in a stacked manner, an intermediate layer is disposed between at least two of the phase change material layers, and the intermediate layer comprises one or a stack of two of the metal layer and the graphene film layer.

4. The composite thermal insulation pad according to claim 3, wherein the composite thermal insulation pad satisfies at least one of the following conditions:
(1) a ratio of a thickness of the intermediate layer to a total thickness of the phase change material layers is (0.3 to 5):100;
(2) the thickness of the intermediate layer is 0.02 mm to 0.04 mm; and
(3) an area of a projection of the intermediate layer on the phase change material layer accounts for 90% to 100% of an area of the phase change material layer.

5. The composite thermal insulation pad according to claim 2, wherein the phase change material layer comprises a thermal insulation substrate and a phase change material, and at least part of the phase change material fills into the thermal insulation substrate.

6. The composite thermal insulation pad according to claim 5, wherein the composite thermal insulation pad satisfies at least one of the following conditions:
(1) the phase change material comprises at least one of a crystalline hydrated salt, a phase change molten salt, paraffin, silicone oil, silica sol, alumina sol, silica-alumina sol, a fatty acid, and an alcohol;
(2) the thermal insulation substrate comprises nano ceramic fiber, and the nano ceramic fiber comprises at least one of silica fiber, alumina fiber, zirconia fiber, silica-alumina ceramic fiber, borosilicate ceramic fiber, boroalumina ceramic fiber, and zirconia-alumina-silica ceramic fiber;
(3) the thermal insulation substrate comprises nano ceramic fiber, an average diameter of the nano ceramic fiber is 200 nm to 800 nm, and a thickness of the thermal insulation substrate is 1 mm to 2 mm;
(4) in the phase change material layer, a mass ratio of the thermal insulation substrate to the phase change material is 1:(0.8 to 3); and
(5) at least part of the phase change material fills into pores of the thermal insulation substrate in a form of phase change microcapsules; wherein the phase change microcapsule comprises a core material and a wall material, the wall material wraps an outer surface of the core material, and the core material comprises the phase change material.

7. The composite thermal insulation pad according to claim 6, wherein the thermal insulation substrate is a ceramic thermal insulation substrate.

8. The composite thermal insulation pad according to claim 6, wherein the composite thermal insulation pad satisfies at least one of the following conditions:
(1) the wall material comprises a polymer matrix, and a mass ratio of the polymer matrix to the core material is 1:(1.3 to 3); and
(2) a particle size Dᵥ50 of the phase change microcapsules is 0.5 µm to 8 µm.

9. The composite thermal insulation pad according to any one of claims 1 to 8, wherein the thermal insulation pad body is provided with a hollow cavity, and the thermal conduction layer is disposed in the hollow cavity.

10. The composite thermal insulation pad according to claim 9, wherein the thermal conduction layer comprises a solid phase change material layer.

11. The composite thermal insulation pad according to any one of claims 1 to 10, wherein the composite thermal insulation pad further comprises:
an encapsulation layer, wherein the encapsulation layer is disposed on a peripheral side of at least one of the thermal conduction layer and the thermal insulation pad body.

12. The composite thermal insulation pad according to claim 11, wherein the composite thermal insulation pad satisfies at least one of the following conditions:
(1) the encapsulation layer comprises a first encapsulation layer, wherein the first encapsulation layer is disposed on the peripheral side of the thermal conduction layer and individually encapsulates the thermal conduction layer, and the first encapsulation layer and the thermal conduction layer constitute an encapsulated thermal conduction layer;
(2) the encapsulation layer further comprises a second encapsulation layer, wherein the second encapsulation layer is disposed on the peripheral side of the thermal insulation pad body and individually encapsulates the thermal insulation pad body; and
(3) the encapsulation layer further comprises a third encapsulation layer, wherein the third encapsulation layer is disposed on a shared peripheral side of the thermal insulation pad body and the thermal conduction layer, and encapsulates the thermal insulation pad body and the thermal conduction layer together.

13. The composite thermal insulation pad according to claim 12, wherein a strain of the encapsulated thermal conduction layer under a stress of 0.5 MPa to 5 MPa is 8% to 20%.

14. The composite thermal insulation pad according to claim 12 or 13, wherein the composite thermal insulation pad satisfies at least one of the following conditions:
(1) the first encapsulation layer, the second encapsulation layer, and the third encapsulation layer are each independently an aluminum-plastic film or a polymer encapsulation film;
(2) a thickness of the first encapsulation layer is 0.1 mm to 0.3 mm;
(3) the first encapsulation layer has a first encapsulation edge portion, wherein the first encapsulation edge portion is folded within the thermal insulation pad body;
(4) thicknesses of the second encapsulation layer and the third encapsulation layer are each independently 0.05 mm to 0.1 mm;
(5) a thickness of the thermal conduction layer accounts for 70% to 96% of a total thickness of the encapsulated thermal conduction layer;
(6) a weak portion is disposed on a region of the first encapsulation layer that constitutes an encapsulation cavity; and
(7) the composite thermal insulation pad further comprises a strain detection member, wherein the strain detection member is disposed on the thermal insulation pad body.

15. The composite thermal insulation pad according to claim 14, wherein the composite thermal insulation pad satisfies at least one of the following conditions:
(1) the thermal conduction layer comprises a phase change material layer; and
(2) the weak portion is a region with a small thickness and/or low material strength.

16. The composite thermal insulation pad according to claim 14, wherein the strain detection member is disposed within the thermal insulation pad body, or disposed on an outer surface of the thermal insulation pad body.

17. The composite thermal insulation pad according to any one of claims 1 to 16, wherein the thermal insulation pad body comprises a first thermal insulation layer and a second thermal insulation layer located on two sides of the thermal conduction layer in a thickness direction.

18. The composite thermal insulation pad according to claim 17, wherein the composite thermal insulation pad satisfies at least one of the following conditions:
(1) a strain of the first thermal insulation layer and the second thermal insulation layer under a stress of 0.5 MPa to 5 MPa is 25% to 70%; and
(2) a strain of the composite thermal insulation pad under a stress of 0.5 MPa to 4 MPa is 15% to 35%.

19. The composite thermal insulation pad according to claim 17 or 18, wherein the composite thermal insulation pad satisfies at least one of the following conditions:
(1) the encapsulation layer comprises a second encapsulation layer, wherein the second encapsulation layer is disposed on a peripheral side of the first thermal insulation layer and/or a peripheral side of the second thermal insulation layer; and
(2) the encapsulation layer comprises a third encapsulation layer, wherein the third encapsulation layer is disposed on a shared peripheral side of the first thermal insulation layer, the thermal conduction layer, and the second thermal insulation layer.

20. The composite thermal insulation pad according to claim 19, wherein the second encapsulation layer has a second encapsulation edge portion, the second encapsulation edge portion is folded and located between the thermal conduction layer and at least one of the first thermal insulation layer and the second thermal insulation layer.

21. The composite thermal insulation pad according to any one of claims 17 to 20, wherein edges of the first thermal insulation layer and the second thermal insulation layer fit with each other to form an assembly cavity, and the thermal conduction layer is located within the assembly cavity.

22. The composite thermal insulation pad according to claim 21, wherein an edge of at least one side surface of at least one of the first thermal insulation layer and the second thermal insulation layer forms a protrusion, and the protrusion encloses to form at least part of the assembly cavity.

23. The composite thermal insulation pad according to any one of claims 1 to 22, wherein the composite thermal insulation pad further comprises a first encapsulation frame and a second encapsulation frame, wherein the first encapsulation frame cooperates with the second encapsulation frame to fix the thermal insulation pad body and the thermal conduction layer.

24. The composite thermal insulation pad according to claim 23, wherein the first encapsulation frame has a first limiting groove, and the second encapsulation frame has a second limiting groove, wherein the thermal insulation pad body and the thermal conduction layer are limited within a limiting space formed by the first limiting groove and the second limiting groove.

25. The composite thermal insulation pad according to any one of claims 1 to 24, wherein the composite thermal insulation pad satisfies at least one of the following conditions:
(1) the thermal insulation pad body is a ceramic material layer;
(2) a thickness of the thermal conduction layer is 1 mm to 6 mm;
(3) a thickness of the thermal insulation pad body is 0.5 mm to 8 mm;
(4) a ratio of the thickness of the thermal conduction layer to the thickness of the thermal insulation pad body is (0.15 to 12):1;
(5) a length dimension and a width dimension of the thermal insulation pad body respectively match a length dimension and a width dimension of the thermal conduction layer; or, at least one of the length dimension and the width dimension of the thermal insulation pad body is greater than a corresponding length dimension or width dimension of the thermal conduction layer; and
(6) the composite thermal insulation pad further comprises a release adhesive layer, wherein the release adhesive layer comprises an adhesive layer and a release film, the adhesive layer is disposed on an outer surface of the thermal insulation pad body, and the release film is disposed on an outer surface of the adhesive layer.

26. A battery, comprising the composite thermal insulation pad according to any one of claims 1 to 25.

27. The battery according to claim 26, further comprising a plurality of battery cells, wherein the composite thermal insulation pad is disposed between at least two adjacent battery cells.

28. The battery according to claim 27, wherein the composite thermal insulation pad is disposed between major surfaces of at least two adjacent battery cells.

29. An electric apparatus, comprising the battery according to any one of claims 26 to 28.
